# EUROPÄISCHE PATENTSCHRIFT

(11) **EP 0 775 730 B1**
(45) Veröffentlichungstag und Bekanntmachung des Hinweises auf die Patenterteilung: **03.05.2000**
(21) Anmeldenummer: 96810798.7
(22) Anmeldetag: 14.11.1996
(51) Int. Cl.: C09B 62/085, C09B 62/51, C09B 62/473, C09B 62/008

(54) **Reaktivfarbstoffe, Verfahren zu deren Herstellung und deren Verwendung**
Reactive dyestuffs, process for their preparation and use thereof
Colorants réactifs, procédé pour leur préparation et leur utilisation

(30) Priorität: 23.11.1995 CH 331695
(43) Veröffentlichungstag der Anmeldung: 28.05.1997
(73) Patentinhaber: Ciba Specialty Chemicals Holding Inc., 4057 Basel (CH)
(72) Erfinder: Lehmann, Urs, 4052 Basel (CH); Frick, Marcel, 4153 Reinach (CH)

(56) Entgegenhaltungen:
- EP-A- 0 056 975
- EP-A- 0 070 806
- EP-A- 0 071 985
- EP-A- 0 657 508
- FR-A- 2 522 672
- JP-A- 53 046 329
- JP-A- 57 199 877
- JP-A- 60 047 071

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die einen hohen Ausziehgrad und hohen Fixiergrad aufweisen, wobei insbesondere keine alkalische Nachbehandlung zur Entfernung nicht fixierten Farbstoffs notwendig ist. Sie sollten ferner eine gute färberische Ausbeute und eine hohe Reaktivität aufweisen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Ausziehgrade, hohe Fixierausbeuten und hohe Faser-Farbstoff-Bindungsstabilitäten auszeichnen. Sie sollten ferner Färbungen mit guten Allgemeinechtheiten, beispielsweise Licht- und Nassechtheiten, ergeben.

Es hat sich gezeigt, dass mit den weiter unten definierten Reaktivfarbstoffen die gestellte Aufgabe weitgehend gelöst wird.

Gegenstand der Erfindung sind daher Reaktivfarbstoffe der Formel 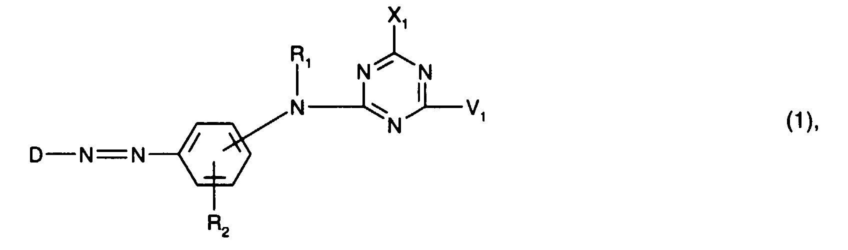 worin
R₁ Wasserstoff oder gegebenenfalls substituiertes C₁-C₄-Alkyl ist,
R₂ Wasserstoff, C₁-C₄-Alkyl, C₁-C₄-Alkoxy, C₂-C₄-Alkanoylamino, Ureido, Halogen oder Sulfo ist,
X₁ Chlor,
V₁ ein Rest der Formel

   -NH-(CH₂)₂₋₃-SO₂Z (2a),

   -NH-(CH₂)₂₋₃-O-(CH₂)₂₋₃-SO₂Z (2b),

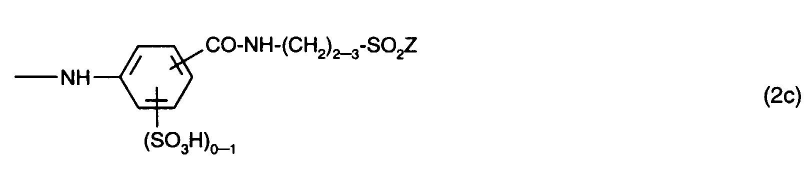

   oder 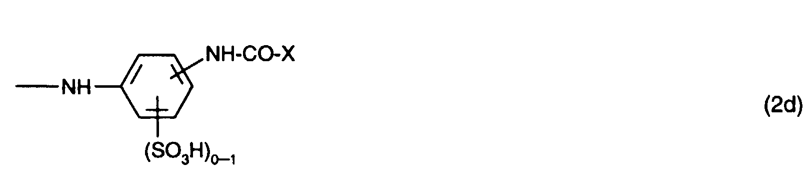 ist,
   wobei
Z der Rest -CH=CH₂ oder -CH₂-CH₂-Y und Y eine Abgangsgruppe ist,
X der Rest 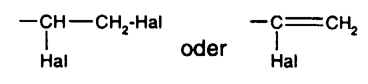 und Hal Halogen ist, und
D ein Rest der Formel 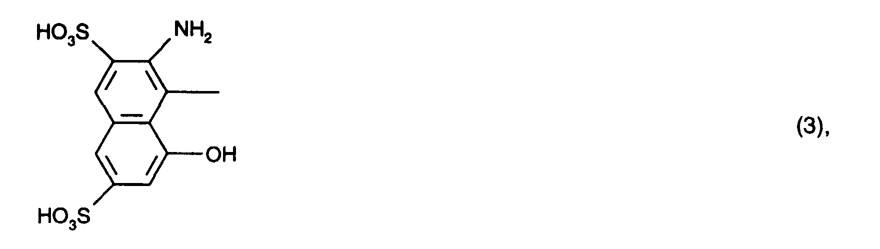 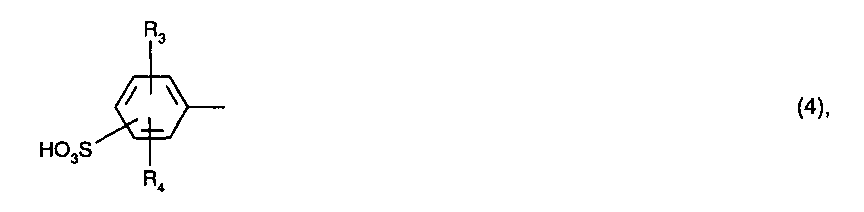 worin
R₃ und R₄ unabhängig voneinander Wasserstoff, C₁-C₄-Alkyl, C₁-C₄-Alkoxy, C₂-C₄-Alkanoylamino, Ureido oder Halogen sind, oder 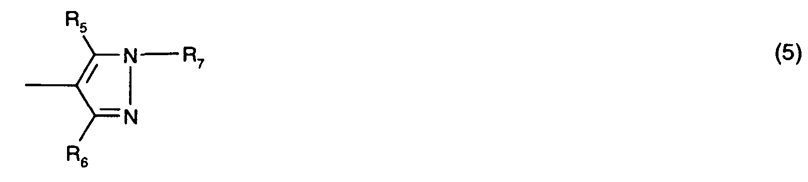 ist,
   worin
R₅ Hydroxy oder Amino,
R₆ Methyl oder Carboxy und
R₇ Wasserstoff oder gegebenenfalls durch C₁-C₄-Alkyl, C₁-C₄-Alkoxy, C₂-C₄-Alkanoylamino, Ureido, Halogen, Sulfo, β-Hydroxyäthylsulfonyl oder einen Rest der Formel -SO₂Z substituiertes Phenyl ist, wobei Z die obigen Bedeutungen hat,
mit der Massgabe dass,
falls V₁ ein Rest der Formel (2a) und D ein Rest der Formel (3) ist, R₂ nicht Sulfo bedeutet, und,
falls V₁ ein Rest der Formel (2a), (2b) oder (2c) und D ein Rest der Formel (5) ist, R₇ Wasserstoff oder Phenyl bedeutet, und
falls V₁ ein Rest der Formel (2d) und D ein Rest der Formel (5) ist, der Reaktivfarbstoff der Formel (1) nicht mehr als zwei Sulfogruppen enthält.

Gegenstand der Erfindung sind ferner Reaktivfarbstoffe der Formel 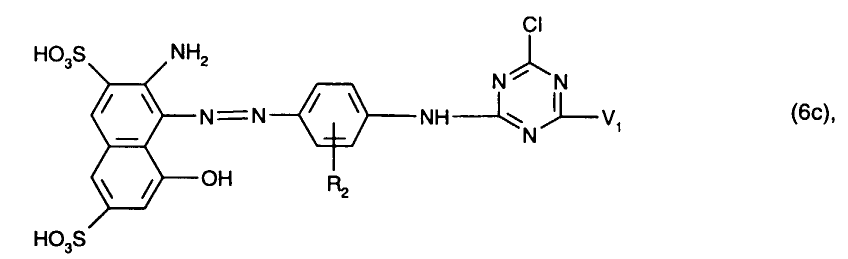 worin R₂ Wasserstoff, C₁-C₄-Alkyl, C₁-C₄-Alkoxy, C₂-C₄-Alkanoylamino, Ureido oder Halogen, insbesondere Wasserstoff, und
V₁ ein Rest der Formel 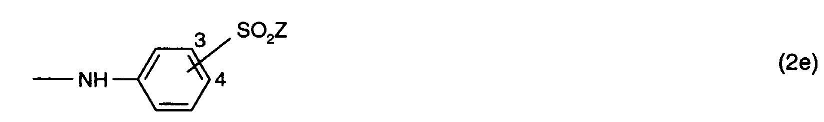 ist, worin Z der Rest -CH=CH₂ oder -CH₂-CH₂-Y und Y eine Abgangsgruppe ist, und der Rest -SO₂Z in Formel (2e) in der bezeichneten 3- oder 4-Position gebunden ist,
oder Reaktivfarbstoffe der Formel 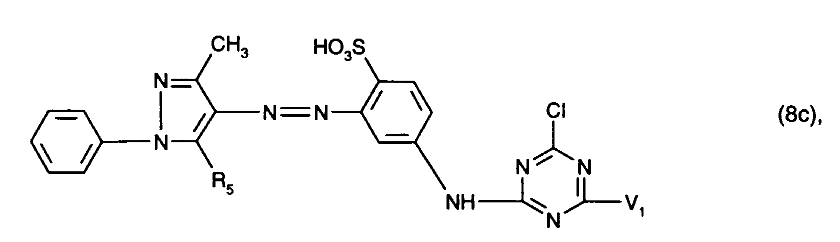 worin R₅ Amino oder insbesondere Hydroxy, und
V₁ ein Rest der oben angegebenen Formel (2e) ist.

In der JP-A-60 047 071, der EP-A-0 056 975, der FR-A-2 522 672, der EP-A-0 657 508, der EP-A-0 071 985 und der JP-A-57 199 877 werden Farbstoffe offenbart, die sich von den erfindungsgemässen Farbstoffen der Formel (1) hinsichtlich des faserreaktiven Restes V₁ unterscheiden.

In der EP-A-0 070 806 werden Farbstoffe offenbart, die sich von den erfindungsgemässen Farbstoffen der Formel (1) hinsichtlich des faserreaktiven Restes X₁ unterscheiden.

In der JP-A-53 046 329 werden Farbstoffe offenbart, die sich von den erfindungsgemässen Farbstoffen der Formel (1) durch die Anzahl der Sulfogruppen unterscheiden.

Die in der EP-A-0 070 806 und der JP-A-53 046 329 offenbarten Farbstoffe unterscheiden sich von den erfindungsgemässen Farbstoffen der Formeln (6c) und (8c), worin V₁ einen Rest der Formel (2e) bedeutet, hinsichtlich des besagten faserreaktiven Restes V₁.

Die in der EP-A-0 056 975 und der JP-A-60 047 071 offenbarten Farbstoffe unterscheiden sich von den erfindungsgemässen Farbstoffen der Formeln (6c) und (8c), worin V₁ einen Rest der Formel (2e) bedeutet, hinsichtlich der terminalen Komponente am jeweiligen Azochromophor.

Die in der FR-A-2 522 672 offenbarten Farbstoffe unterscheiden sich von den erfindungsgemässen Farbstoffen der Formeln (6c) und (8c), worin V₁ einen Rest der Formel (2e) bedeutet, einerseits hinsichtlich des Halogen-Substituenten am Triazinring und andererseits hinsichtlich der terminalen Komponente am jeweiligen Azochromophor.

Die in der EP-A-0 657 508 offenbarten Farbstoffe unterscheiden sich von den erfindungsgemässen Farbstoffen der Formeln (6c) und (8c), worin V₁ einen Rest der Formel (2e) bedeutet, im Fall des erfindungsgemässen Farbstoffs der Formel (6c) durch die Anzahl der Sulfogruppen und im Fall des erfindungsgemässen Farbstoffs der Formel (8c) einerseits durch die Stellung des Triazinylaminorestes und andererseits dem Bindungsort der Sulfogruppe im Azochromophor.

Die in der JP-A-57 199 877 offenbarten Farbstoffe unterscheiden sich von den erfindungsgemässen Farbstoffen der Formeln (6c) und (8c), worin V₁ einen Rest der Formel (2e) bedeutet, einerseits hinsichtlich der Anzahl der Sulfogruppen und andererseits hinsichtlich der Stellung des Triazinylaminorestes.

Die in der EP-A-0 071 985 offenbarten Farbstoffe unterscheiden sich von den erfindungsgemässen Farbstoffen der Formeln (6c) und (8c), worin V₁ einen Rest der Formel (2e) bedeutet, hinsichtlich der Anzahl der Sulfogruppen.

Als C₁-C₄-Alkylreste kommen für R₁ z.B. Methyl, Aethyl, Propyl, Isopropyl, Butyl, sek.-Butyl, tert.-Butyl oder Isobutyl in Betracht. Die genannten Alkylreste können unsubstituiert oder z.B. durch Hydroxy, Sulfo oder Sulfato substituiert sein.

Bevorzugt ist R₁ Wasserstoff oder gegebenenfalls durch Hydroxy, Sulfo oder Sulfato substituiertes C₁-C₄-Alkyl, insbesondere Wasserstoff oder C₁-C₄-Alkyl, und vorzugsweise Wasserstoff.

Als C₁-C₄-Alkyl kommt für R₂, R₃ und R₄ sowie als möglicher Substituent des Restes R₇ z.B. Methyl, Äthyl, Propyl, Isopropyl, Butyl, sek.-Butyl, tert.-Butyl oder Isobutyl, insbesondere Methyl, in Betracht.

Als C₁-C₄-Alkoxy kommt für R₂, R₃ und R₄ sowie als möglicher Substituent des Restes R₇ z.B. Methoxy, Äthoxy, Propoxy, Isopropoxy, Butoxy oder Isobutoxy, insbesondere Methoxy, in Betracht.

Als Halogen kommt für R₂, R₃ und R₄ sowie als möglicher Substituent des Restes R₇ Fluor, Chlor oder Brom, insbesondere Chlor, in Betracht.

Als C₂-C₄-Alkanoylamino kommt für R₂, R₃ und R₄ sowie als möglicher Substituent des Restes R₇ insbesondere Acetylamino oder Propionylamino, vorzugsweise Acetylamino, in Betracht.

Hal steht bevorzugt für Chlor oder insbesondere Brom.

Bei der Abgangsgruppe Y handelt es sich z.B. um -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂. Bevorzugt ist Y eine Gruppe der Formel -Cl, -OSO₃H, -SSO₃H, -OCO-CH₃, -OCO-C₆H₅ oder -OPO₃H₂, insbesondere -Cl, -OSO₃H oder -OCO-CH₃ und besonders bevorzugt -Cl oder -OSO₃H. Ganz besonders bevorzugt ist Y eine Gruppe der Formel -OSO₃H.

R₂ ist bevorzugt Wasserstoff, C₁-C₄-Alkyl, C₁-C₄-Alkoxy, C₂-C₄-Alkanoylamino oder Sulfo.

R₃ und R₄ sind bevorzugt unabhängig voneinander Wasserstoff, C₁-C₄-Alkyl, C₁-C₄-Alkoxy oder Halogen, insbesondere Wasserstoff.

R₅ ist bevorzugt Hydroxy.

R₆ ist bevorzugt Methyl.

R₇ ist bevorzugt Wasserstoff oder gegebenenfalls durch C₁-C₄-Alkyl, C₁-C₄-Alkoxy, Halogen, Sulfo, β-Hydroxyäthylsulfonyl oder einen Rest der Formel -SO₂Z substituiertes Phenyl. Besonders bevorzugt ist R₇ Wasserstoff oder gegebenenfalls durch Halogen, Sulfo, β-Hydroxyäthylsulfonyl oder einen Rest der Formel -SO₂Z substituiertes Phenyl. Ganz besonders bevorzugt ist R₇ Wasserstoff oder gegebenenfalls durch Halogen oder Sulfo substituiertes Phenyl. Von besonderem Interesse sind hierbei die entsprechenden Phenylreste, insbesondere unsubstituiertes Phenyl.

Bevorzugt enthalten die Reaktivfarbstoffe der Formel (1) eine oder zwei Sulfogruppen, insbesondere eine Sulfogruppe.

Bevorzugt sind Reaktivfarbstoffe der Formel (1), worin
R₁ Wasserstoff oder C₁-C₄-Alkyl, insbesondere Wasserstoff, ist,
R₃ und R₄ Wasserstoff sind, Y -Cl oder -OSO₃H und
Hal Chlor oder Brom, insbesondere Brom, ist.

Bei den in den Formeln (2a) bis (2c) enthaltenen Resten -(CH₂)₂₋₃- handelt es sich bevorzugt um solche der Formel -(CH₂)₂-.

Bevorzugte Reste V₁ in den Farbstoffen der Formel (1) sind solche der Formeln (2c) oder (2d), insbesondere solche der Formel (2d).

Als Reste D sind solche der Formel (3) und insbesondere solche der Formel (5) bevorzugt.

Besonders bevorzugt als einen Rest D der Formel (3) enthaltende Reaktivfarbstoffe der Formel (1) sind solche der Formel 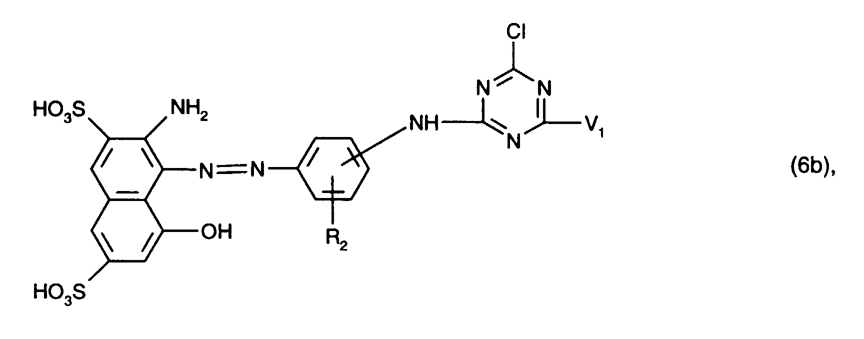 worin R₂ Wasserstoff, C₁-C₄-Alkyl, C₁-C₄-Alkoxy, C₂-C₄-Alkanoylamino, Ureido oder Halogen, insbesondere Wasserstoff, ist und
für V₁ die oben angegebenen Bedeutungen und Bevorzugungen gelten.

Ganz besonders bevorzugt als einen Rest D der Formel (3) enthaltende Reaktivfarbstoffe sind solche der Formel 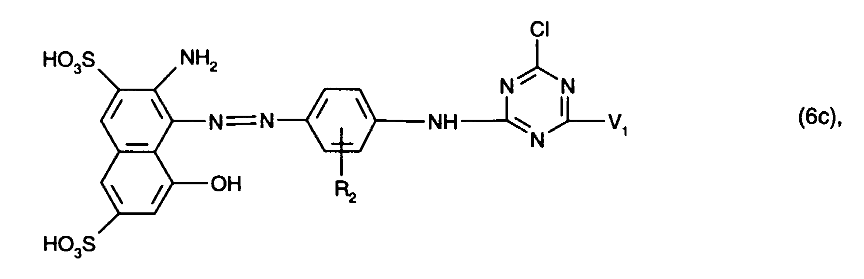 worin R₂ Wasserstoff, C₁-C₄-Alkyl, C₁-C₄-Alkoxy, C₂-C₄-Alkanoylamino, Ureido oder Halogen, insbesondere Wasserstoff, ist und
für V₁ die oben angegebenen Bedeutungen und Bevorzugungen gelten.

Die Reaktivfarbstoffe der Formeln (6b) und (6c) enthalten vorzugsweise zwei oder drei, insbesondere zwei Sulfogruppen.

Besonders bevorzugt als einen Rest D der Formel (4) enthaltende Reaktivfarbstoffe der Formel (1) sind solche der Formel 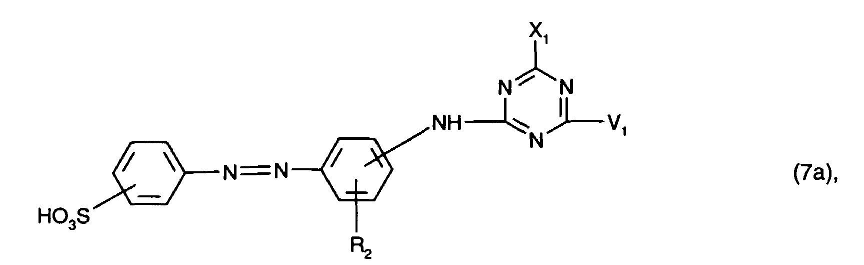 worin R₂ Wasserstoff, C₁-C₄-Alkyl, C₁-C₄-Alkoxy, C₂-C₄-Alkanoylamino, Ureido oder Halogen, vorzugsweise C₁-C₄-Alkyl, C₁-C₄-Alkoxy, C₂-C₄-Alkanoylamino, Ureido oder Halogen und insbesondere C₂-C₄-Alkanoylamino, ist, X₁ Chlor ist, und für V₁ die oben angegebenen Bedeutungen und Bevorzugungen gelten.

Ganz besonders bevorzugt als einen Rest D der Formel (4) enthaltende Reaktivfarbstoffe der Formel (1) sind solche der Formel 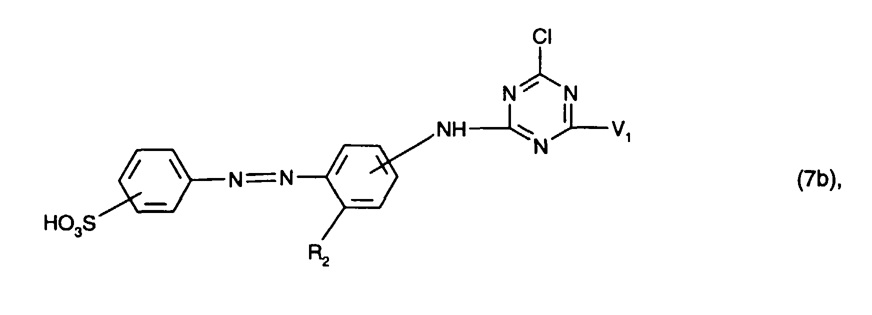 worin R₂ Wasserstoff, C₁-C₄-Alkyl, C₁-C₄-Alkoxy, C₂-C₄-Alkanoylamino, Ureido oder Halogen, vorzugsweise C₁-C₄-Alkyl, C₁-C₄-Alkoxy, C₂-C₄-Alkanoylamino, Ureido oder Halogen und insbesondere C₂-C₄-Alkanoylamino, ist, und
für V₁ die oben angegebenen Bedeutungen und Bevorzugungen gelten.

Ganz besonders wichtig als einen Rest D der Formel (4) enthaltende Reaktivfarbstoffe der Formel (1) sind solche der Formel 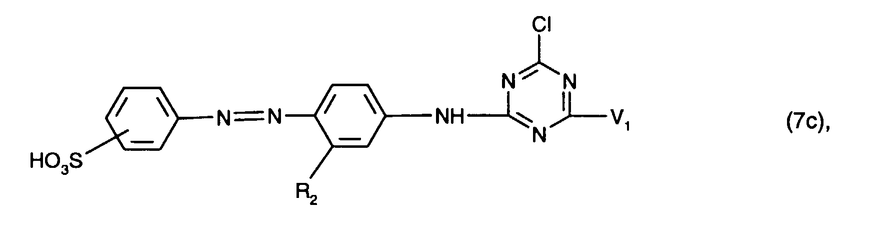 worin R₂ Wasserstoff, C₁-C₄-Alkyl, C₁-C₄-Alkoxy, C₂-C₄-Alkanoylamino, Ureido oder Halogen, vorzugsweise C₁-C₄-Alkyl, C₁-C₄-Alkoxy, C₂-C₄-Alkanoylamino, Ureido oder Halogen und insbesondere C₂-C₄-Alkanoylamino, ist, und für V₁ die oben angegebenen Bedeutungen und Bevorzugungen gelten.

Die im Phenylring der Farbstoffe der Formeln (7a) bis (7c) enthaltene Sulfogruppe ist vorzugsweise in 4- oder insbesondere in 3-Stellung, relativ zur Azobrücke, gebunden.

Die Reaktivfarbstoffe der Formeln (7a), (7b) und (7c) enthalten vorzugsweise eine oder zwei, insbesondere nur eine Sulfogruppe.

Besonders bevorzugt als einen Rest D der Formel (5) enthaltende Reaktivfarbstoffe der Formel (1) sind solche der Formel 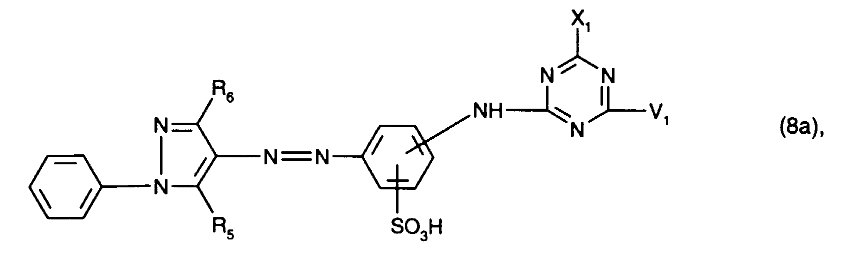 worin R₅ Amino oder insbesondere Hydroxy, R₆ Carboxy oder insbesondere Methyl, X₁ Chlor und V₁ ein Rest der Formel (2a), (2b) oder (2c), insbesondere ein Rest der Formel (2b) oder (2c) und vorzugsweise ein Rest der Formel (2b) ist.

Ganz besonders bevorzugt als einen Rest D der Formel (5) enthaltende Reaktivfarbstoffe der Formel (1) sind solche der Formel 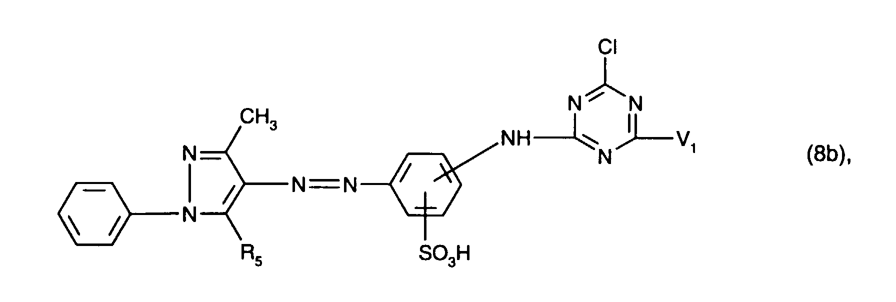 worin R₅ Amino oder insbesondere Hydroxy und V₁ ein Rest der Formel (2a), (2b) oder (2c), insbesondere ein Rest der Formel (2b) oder (2c) und vorzugsweise ein Rest der Formel (2b) ist.

Ganz besonders wichtig als einen Rest D der Formel (5) enthaltende Reaktivfarbstoffe sind solche der Formel 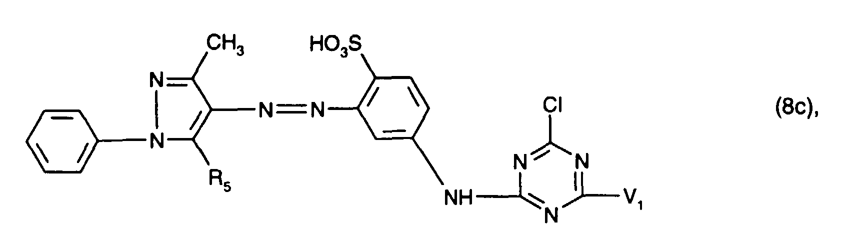 worin R₅ Amino oder insbesondere Hydroxy und V₁ ein Rest der Formel (2a), (2b), (2c) oder (2e), insbesondere ein Rest der Formel (2b), (2c) oder (2e) und vorzugsweise ein Rest der Formel (2b) oder (2e) ist.

Die Reaktivfarbstoffe der Formeln (8a), (8b) und (8c) enthalten vorzugsweise eine oder zwei, insbesondere zwei Sulfogruppen.

Besonders bevorzugt als einen Rest D der Formel (5) enthaltende Reaktivfarbstoffe der Formel (1) sind ferner solche der Formel 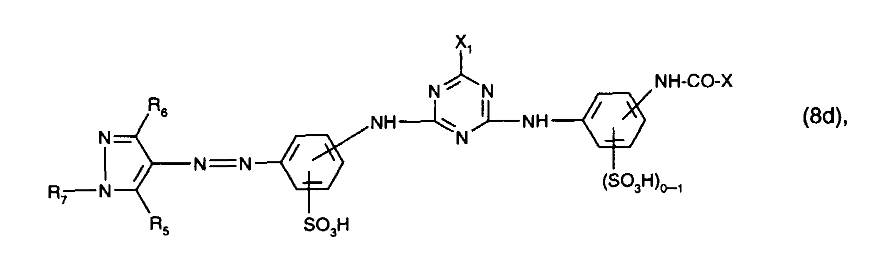 wobei für R₅, R₆, R₇, X₁ und X die oben angegebenen Bedeutungen und Bevorzugungen gelten und wobei die Reaktivfarbstoffe der Formel (8d) nur eine oder zwei Sulfogruppen, insbesondere zwei Sulfogruppen, enthalten.

Ganz besonders bevorzugt als einen Rest D der Formel (5) enthaltende Reaktivfarbstoffe der Formel (1) sind weiterhin solche der Formel 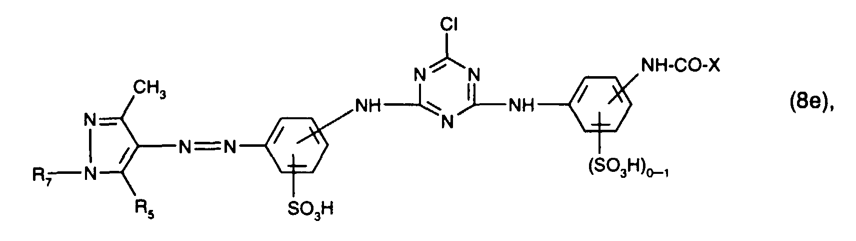 wobei für R₅, R₇ und X die oben angegebenen Bedeutungen und Bevorzugungen gelten und wobei die Reaktivfarbstoffe der Formel (8e) nur eine oder zwei Sulfogruppen, insbesondere zwei Sulfogruppen, enthalten.

Ganz besonders wichtig als einen Rest D der Formel (5) enthaltende Reaktivfarbstoffe der Formel (1) sind solche der Formel 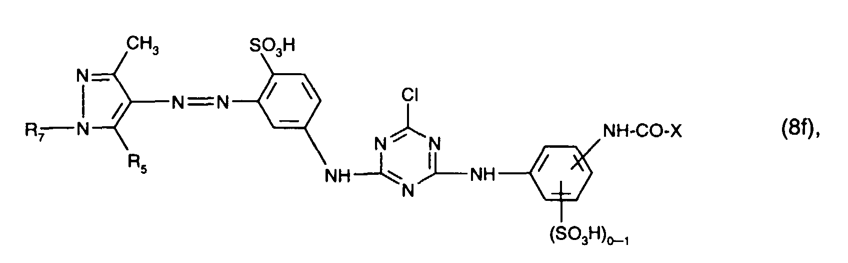 wobei für R₅, R₇ und X die oben angegebenen Bedeutungen und Bevorzugungen gelten und wobei die Reaktivfarbstoffe der Formel (8f) nur eine oder zwei Sulfogruppen, insbesondere zwei Sulfogruppen, enthalten.

Gegenstand der vorliegenden Erfindung ist ferner ein Verfahren zur Herstellung der Reaktivfarbstoffe der Formel (1), welches dadurch gekennzeichnet ist, dass man Verbindungen der Formeln 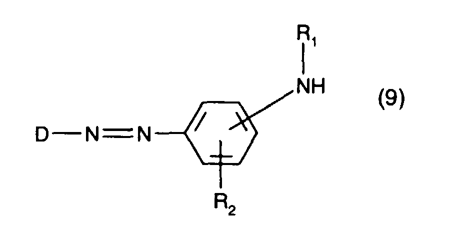 und

H-V₁ (10)

mit Cyanurchlorid umsetzt und gegebenenfalls eine Umwandlungsreaktion anschliesst, wobei R₁, R₂ und V₁ die oben unter Formel (1) angegebenen Bedeutungen haben.

Da die einzelnen oben angegebenen Verfahrensschritte in unterschiedlicher Reihenfolge, gegebenenfalls auch gleichzeitig, ausgeführt werden können, sind verschiedene Verfahrensvarianten möglich. Im allgemeinen führt man die Umsetzung schrittweise durch, wobei sich die Reihenfolge der einfachen Reaktionen zwischen den einzelnen Reaktionskomponenten vorteilhafterweise nach den besonderen Bedingungen richtet. So wird z.B. eine Verbindung der Formel (9) mit Cyanurchlorid umgesetzt und das erhaltene Produkt anschliessend mit einer Verbindung der Formel (10) kondensiert. Ferner kann beispielsweise eine Verbindung Formel (10) mit Cyanurchlorid umgesetzt und das erhaltene Produkt anschliessend mit einer Verbindung der Formel (9) kondensiert werden.

Die einzelnen Kondensationsreaktionen erfolgen z.B. gemäss an sich bekannter Verfahren, in der Regel in wässriger Lösung, bei einer Temperatur von z.B. 0 bis 50°C, insbesondere 0 bis 10°C, und einem pH-Wert von z.B. 3 bis 10, insbesondere 3 bis 7.

Ausserdem können im Anschluss an die Synthese Umwandlungsreaktionen, wie z.B. eine Eliminierungsreaktion, ausgeführt werden. Beispielsweise kann man Reaktivfarbstoffe der Formel (1), welche Sulfatoäthylsulfonylreste oder α,β-Dihalogenpropionylaminoreste enthalten, mit einer Base, wie z.B. Natriumhydroxid, behandeln, wobei die Sulfatoäthylsulfonylreste in Vinylsulfonylreste und die α,β-Dihalogenpropionylaminoreste in α-Halogenacryloylaminoreste übergehen.

Die Verbindungen der Formeln (9) und (10) sind bekannt oder können in Analogie zu bekannten Verbindungen hergestellt werden.

Die erfindungsgemässen Reaktivfarbstoffe der Formeln (6c) oder (8c), worin V₁ ein Rest der Formel (2e) ist und die Reste R₂, R₅ und Z die oben angegebenen Bedeutungen haben, können in Analogie zum Herstellungsverfahren der Reaktivfarbstoffe der Formel (1) erhalten werden.

Die erfindungsgemässen Reaktivfarbstoffe liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Reaktivfarbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasem und Polyurethane und cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose.

Bevorzugt ist das Färben oder Bedrucken von natürlichen Polyamidfasermaterialien wie z.B. Wolle, wie auch von synthetischen Polyamidfasermaterialien, wie z.B. Polyamid 6 oder Polyamid 6.6. Weiterhin sind die erfindungsgemässen Reaktivfarbstoffe geeignet zum Färben oder Bedrucken von Woll- und synthetischem Polyamid-Mischgeweben oder -Garnen. Besonders bevorzugt ist das Färben oder Bedrucken von natürlichen Polyamidfasermaterialien, insbesondere von Wolle.

Das genannte Textilmaterial kann dabei in den verschiedensten Verarbeitungsformen vorliegen, wie z.B. als Faser, Garn, Gewebe oder Gewirke und insbesondere in Form von Teppichen.

Die erfindungsgemässen Reaktivfarbstoffe lassen sich auf verschiedene Weise auf das Fasermaterial applizieren und auf der Faser fixieren, insbesondere in Form von wässrigen Farbstofflösungen und -druckpasten, wobei das Färben, insbesondere nach dem Ausziehverfahren, bevorzugt ist.

Die erfindungsgemässen Reaktivfarbstoffe zeichnen sich durch hohe Reaktivität, gutes Fixiervermögen und ein gutes Ausziehverhalten aus. Die erfindungsgemässen Reaktivfarbstoffe eignen sich auch besonders zum Druck, vor allem zum Bedrucken von stickstoffhaltigen Fasern. Weiterhin sind die erfindungsgemässen Reaktivfarbstoffe gut mit anderen Farbstoffen kombinierbar.

Die mit den erfindungsgemässen Reaktivfarbstoffen hergestellten Färbungen und Drucke besitzen eine gute Lichtechtheit und sehr gute Nassechtheitseigenschaften, wie Wasch-, Wasser-, Seewasser-, Ueberfärbe- und Schweissechtheiten. Es werden faser- und flächenegale Färbungen erhalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Beispiel 1:

a) 10 Teile einer Verbindung, welche in Form der freien Säure der Formel 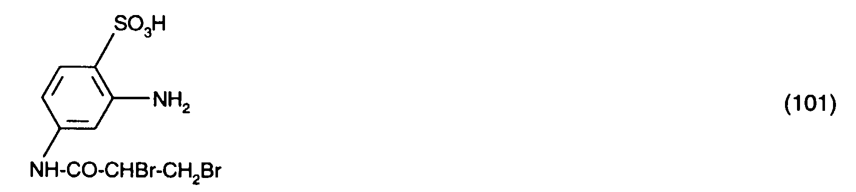 entspricht, werden in 100 Teilen Wasser verrührt, durch Zugabe von 0,35 Teilen Na₂HPO₄·12H₂O auf einen pH-Wert von 6 gestellt und auf eine Temperatur von 0°C abgekühlt. Zu der so erhaltenen Suspension lässt man innerhalb von 10 bis 15 Minuten eine Lösung aus 4,85 Teilen Cyanurchlorid und 50 Teilen Aceton zutropfen, wobei der pH durch Zugabe wässriger Natriumhydroxidlösung bei einem Wert von 3 gehalten wird. Es wird eine Stunde bei einer Temperatur von 0 bis 2°C und einem pH-Wert von 3 nachgerührt. Nach Zugabe von Natriumchlorid wird eine weitere Stunde nachgerührt, das erhaltene Produkt abfiltriert, dieses mit 10%-iger, wässriger Natriumchloridlösung nachgewaschen und abgepresst. Man erhält einen feuchten Presskuchen, welcher die in Form der freien Säure angegebene Verbindung der Formel 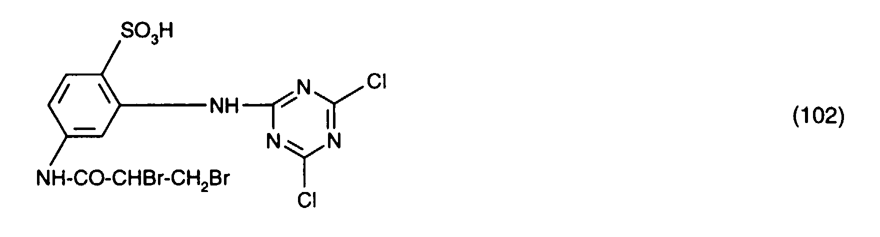 enthält.
b) 8,8 Teile einer Verbindung, welche in Form der freien Säure der Formel 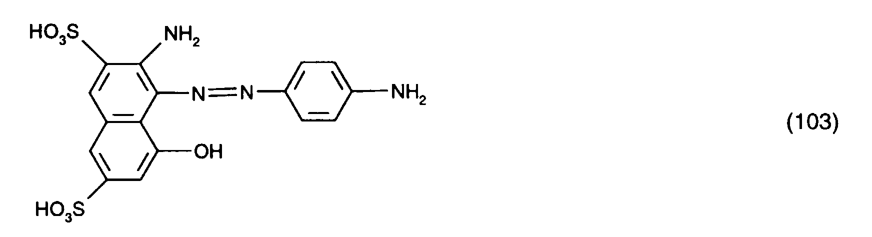 entspricht, werden in 100 Teilen Wasser und 11,1 Teilen 1-normaler Natriumhydroxidlösung bei Raumtemperatur und einem pH-Wert von 5,5 gelöst. Diese Lösung wird anschliessend innerhalb von 45 Minuten zu einer 0 bis 5°C kalten Suspension getropft, welche 60 Teile des gemäss a) erhältlichen feuchten Presskuchens in 100 Teilen Eiswasser enthält. Während der Zugabe wird der pH durch Zugabe wässriger Natriumhydrogencarbonatlösung bei einem Wert von 5,8 bis 6 gehalten. Es wird 90 Minuten bei Raumtemperatur und einem pH-Wert von 5,8 bis 6 nachgerührt. Anschliessend wird der Farbstoff abfiltriert, mit 10%-iger, wässriger Natriumchloridlösung nachgewaschen und bei einer Temperatur von 30 bis 35°C getrocknet. Man erhält einen Farbstoff, welcher in Form der freien Säure der Verbindung der Formel 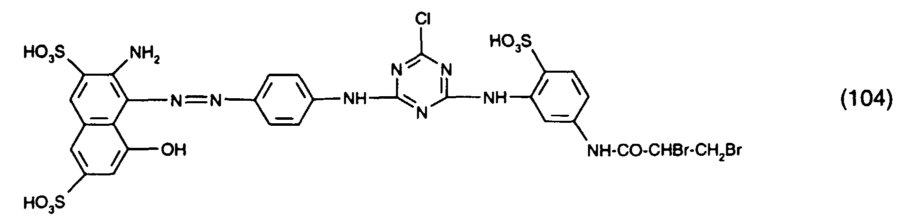 entspricht. Der Farbstoff der Formel (104) färbt Wolle und synthetisches Polyamidfasermaterial in roten Farbtönen.

Beispiele 2 bis 10: In analoger Weise zu den Angaben in Beispiel 1 können die in der folgenden Tabelle 1 in Spalte 2 in Form der freien Säure angegebenen Farbstoffe erhalten werden, welche Wolle und synthetisches Polyamidfasermaterial in den in Spalte 3 angegebenen Farbtönen färben. Falls die in der folgenden Tabelle angegebenen Farbstoffe keinen Rest der Formel -NH-CO-CHBr-CH₂Br oder -CO-NH-(CH₂)₂-SO₂-CH₂CH₂Cl enthalten, erfolgt die erste Kondensation bei einem pH-Wert von ca. 6 und einer Temperatur von ca. 10 bis 30°C.

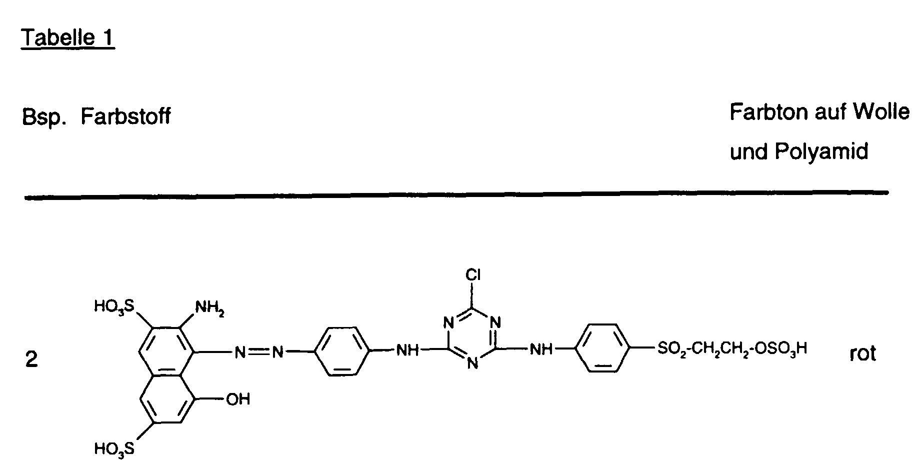

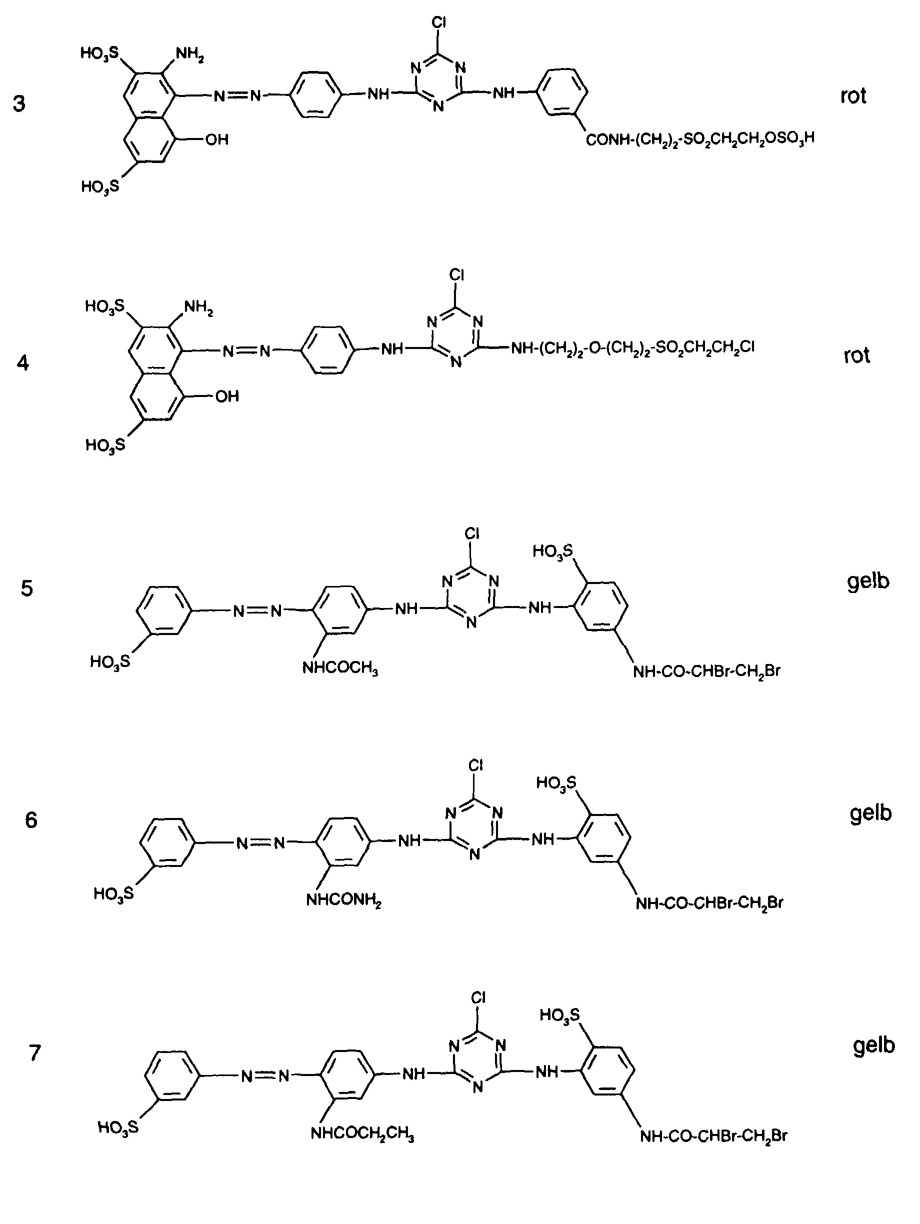

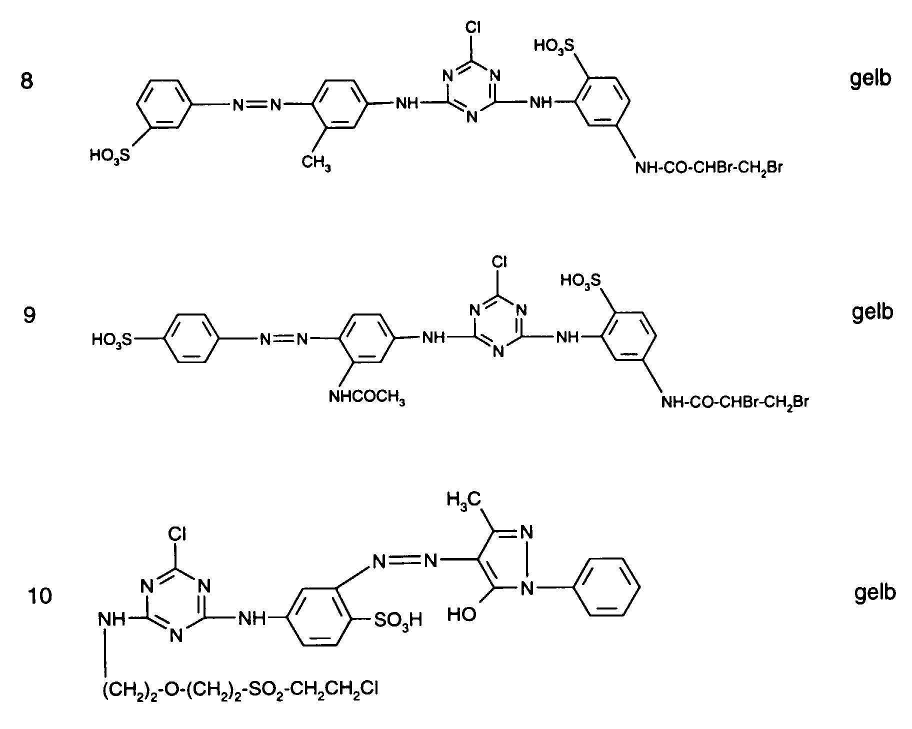

### Beispiel 11:

a) 3,7 Teile Cyanurchlorid werden innerhalb von 15 Minuten bei einer Temperatur von 0 bis 2°C in eine Mischung aus 18 Teilen Wasser, 38 Teilen Eis und 0,02 Teilen Na₂HPO₄·12H₂O suspendiert. Zu der so erhaltenen Suspension lässt man innerhalb von 30 Minuten eine Lösung aus 8,8 Teilen der Verbindung der Formel (103), 100 Teilen Wasser und 11,5 Teilen einer 1-normalen, wässrigen Natriumhydroxidlösung zutropfen, wobei der pH durch Zugabe wässriger Natriumhydroxidlösung bei einem Wert von 3 gehalten wird. Es wird eine Stunde bei einer Temperatur von 0 bis 2°C und einem pH-Wert von 3 nachgerührt. Man erhält eine Lösung, welche die in Form der freien Säure angegebene Verbindung der Formel 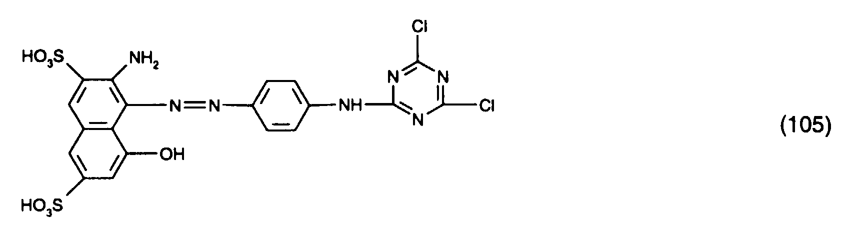 enthält.
b) 9,7 Teile einer Verbindung, welche in Form der freien Säure der Formel 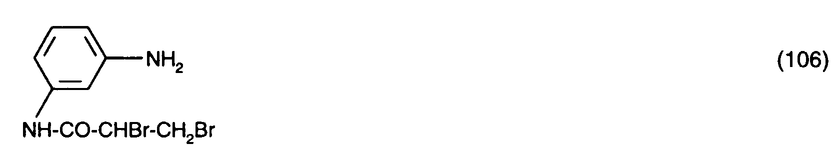 entspricht, werden bei Raumtemperatur in 20 Teilen Wasser und 60 Teilen Aceton gelöst. Die so erhaltene Lösung lässt man innerhalb von einer Stunde zu der gemäss a) erhaltenen, auf eine Temperatur von 0 bis 5°C abgekühlten Lösung tropfen. Während der Zugabe wird der pH mittels wässriger, 10%-iger Natriumhydrogencarbonatlösung bei einem Wert von 5,8 bis 6 gehalten. Es wird über Nacht bei Raumtemperatur und einem pH-Wert von 5,8 bis 6 nachgerührt. Nach Zugabe von Kaliumchlorid wird 30 Minuten gerührt, der Farbstoff abfiltriert, mit wässriger Kaliumchloridlösung gewaschen und bei einer Temperatur von 30 bis 35°C getrocknet. Man erhält einen Farbstoff, welcher in Form der freien Säure der Verbindung der Formel 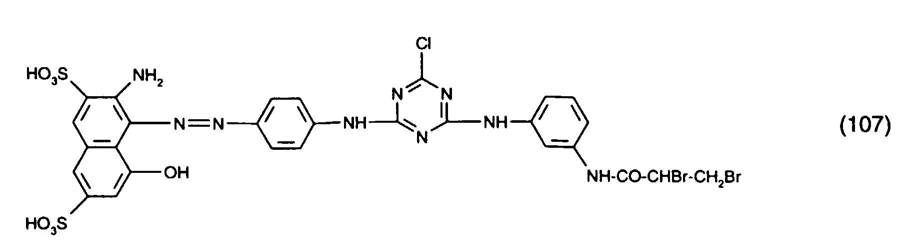 entspricht. Der Farbstoff der Formel (107) färbt Wolle und synthetisches Polyamidfasermaterial in roten Farbtönen.

Beispiele 12 bis 21: In analoger Weise zu den Angaben in Beispiel 11 können die in der folgenden Tabelle 2 in Spalte 2 in Form der freien Säure angegebenen Farbstoffe erhalten werden, welche Wolle und synthetisches Polyamidfasermaterial in den in Spalte 3 angegebenen Farbtönen färben.

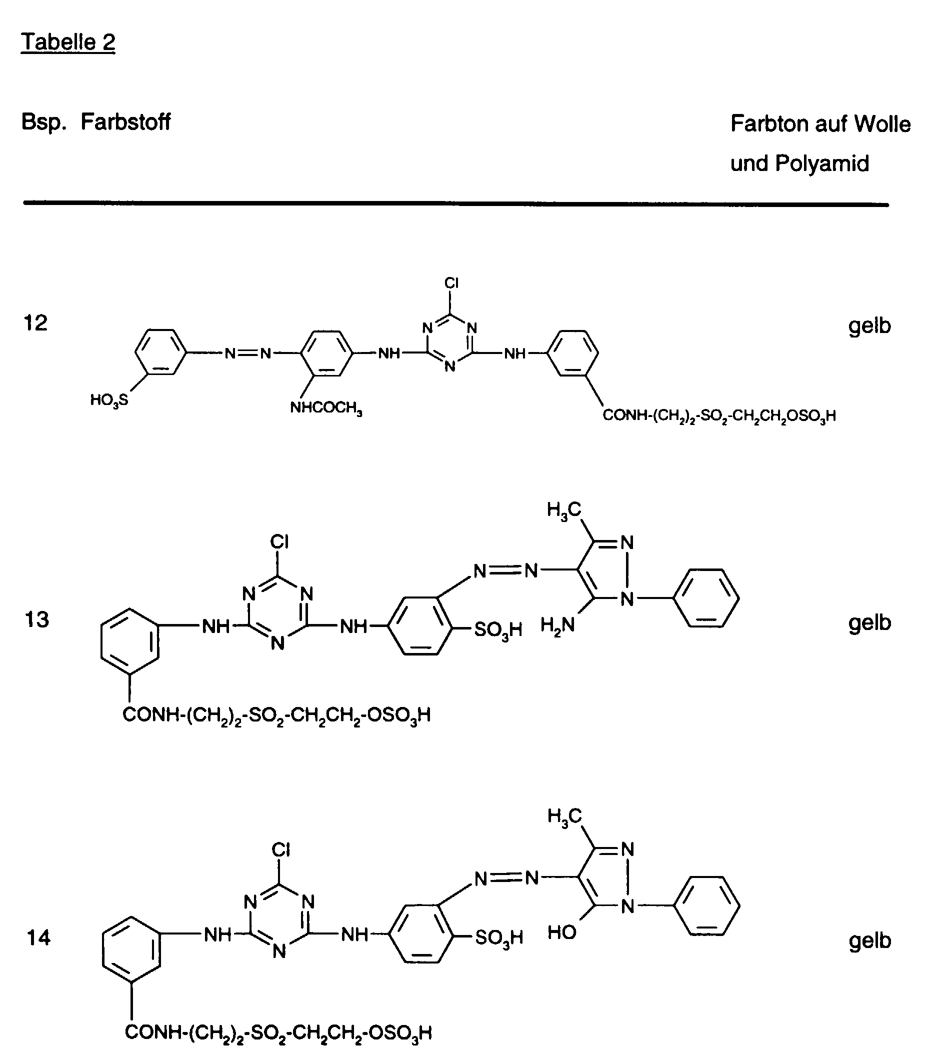

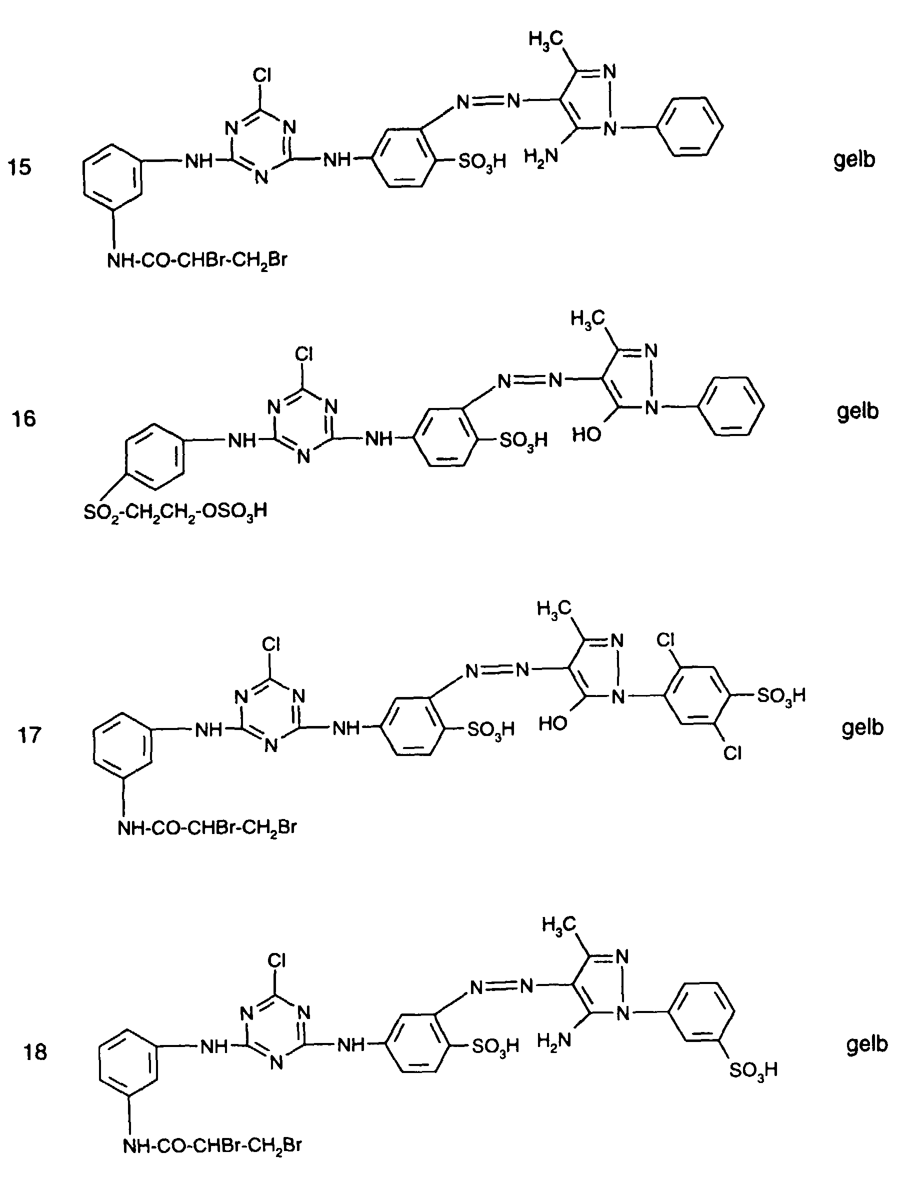

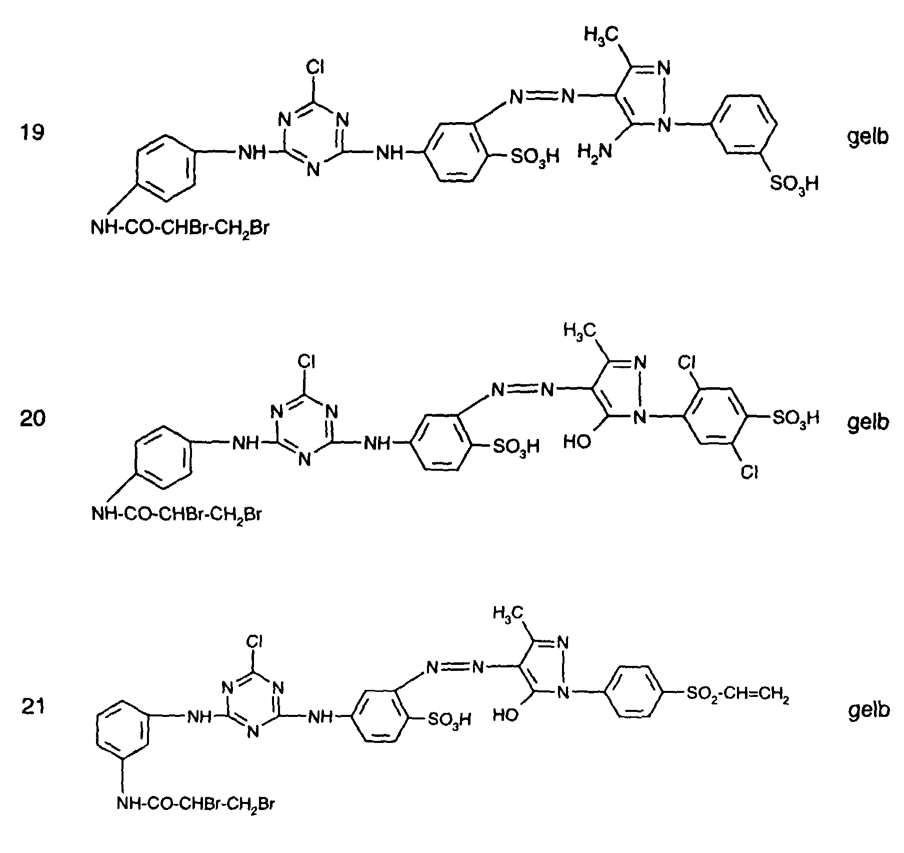

### Beispiel 22:

a) 36,8 Teile Cyanurchlorid werden bei einer Temperatur von 8°C und einem pH-Wert von ca. 6 in 250 Teilen Eis, 150 Teilen Wasser und 0,2 Teilen Na₂HPO₄·12H₂O suspendiert. Anschliessend wird innerhalb von 1,5 Stunden eine Lösung aus 45,3 Teilen einer Verbindung der Formel

   H₂N-(CH₂)₂-O-(CH₂)₂-SO₂-CH₂CH₂Cl (108)

   in 150 Teilen Wasser zudosiert, wobei der pH durch Zugabe wässriger, 10%-iger Natriumhydrogencarbonatlösung bei einem Wert von 6,4 gehalten wird. Es wird eine Stunde bei einer Temperatur von 0 bis 2°C und einem pH-Wert von 6,4 gerührt. Es wird ca. 4 Stunden bei einer Temperatur von 8 bis 10°C und einem pH-Wert von 6,4 nachgerührt. Nach Filtration und Trocknung erhält man eine Verbindung der Formel 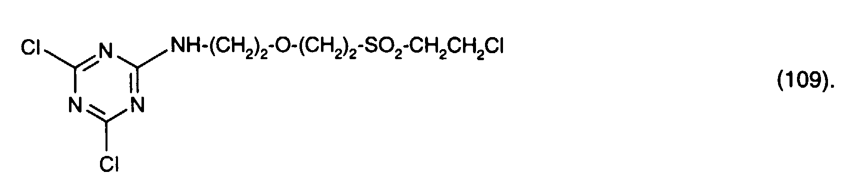
b) 22 Teile der wie oben unter a) angegeben erhältlichen Verbindung der Formel (109) werden bei einer Temperatur von 10°C und einem pH-Wert von 2,3 in 100 Teile Eiswasser suspendiert. Anschliessend wird innerhalb von 15 Minuten eine Lösung aus 10,2 Teilen einer Verbindung der Formel 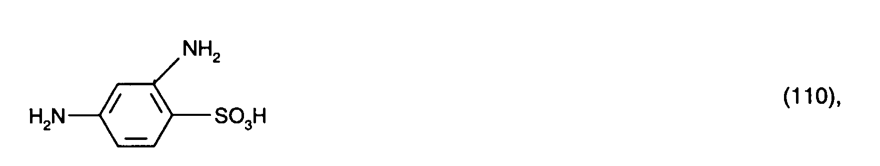 100 Teilen Wasser und 26 Teilen einer 2-normalen, wässrigen Natriumhydroxidlösung zugegeben, wobei die Temperatur bei 35 bis 40°C und der pH durch Zugabe von wässriger, 10%-iger Natriumhydrogencarbonatlösung bei einem Wert von ca. 7 gehalten wird. Es wird 6 Stunden unter diesen Bedingungen gerührt. Die Reaktionsmischung wird mittels Salzsäure (16%) auf einen pH-Wert von 1 bis 1,2 gestellt. Nach Zugabe von Natriumchlorid wird das Produkt abfiltriert und mit wässriger Natriumchloridlösung gewaschen. Man erhält ein feuchtes Pressgut, welches die in Form der freien Säure angegebene Verbindung der Formel 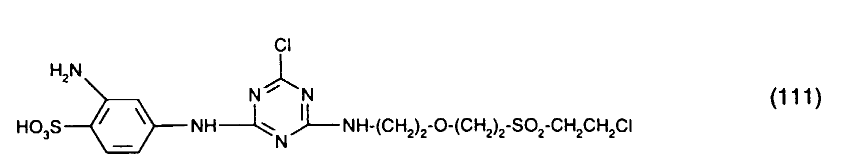 enthält.
c) 17,5 Teile des wie oben unter b) angegeben erhältlichen feuchten Pressguts werden bei einer Temperatur von 0 bis 2°C in 175 Teile Wasser suspendiert und der pH wird mittels Salzsäure (32%) auf einen Wert von 1 gestellt. Bei einer Temperatur von 5 bis 10°C wird innerhalb von 90 Minuten durch Zugabe von 3,8 Teilen einer wässrigen, 4-normalen Natriumnitritlösung diazotiert und überschüssiges Nitrit wird anschliessend durch Zugabe von Sulfaminsäure zerstört.
d) Zur Herstellung einer Suspension der Kupplungskomponente werden 4,9 Teile der Verbindung der Formel 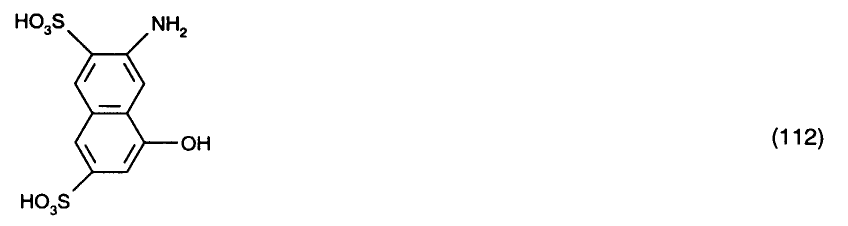 bei Raumtemperatur und einem pH-Wert von 7,5 bis 8 in 50 Teilen Wasser und 3,4 Teilen einer wässrigen, 15%-igen Natriumhydroxidlösung gelöst. Anschliessend wird mit Essigsäure ein pH-Wert von 3,5 eingestellt und es wird auf eine Temperatur von 0 bis 5°C abgekühlt. Zu der so erhaltenen Suspension wird die wie oben unter c) angegeben erhältliche Suspension der Diazokomponente innerhalb von 30 Minuten zugegeben. Hierbei wird der pH mittels einer wässrigen, gesättigten Natriumacetatlösung bei einem Wert von 3,5 gehalten. Anschliessend wird 2,5 Stunden bei einem pH-Wert von 3,5 und einer Temperatur von 0 bis 5°C nachgerührt. Nach Zugabe von Natriumchlorid wird über Nacht nachgerührt, der Farbstoff abfiltriert und getrocknet. Man erhält einen Farbstoff, welcher in Form der freien Säure der Verbindung der Formel 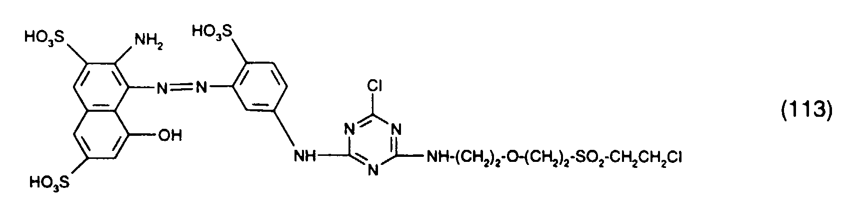 entspricht. Der Farbstoff der Formel (113) färbt Wolle und synthetisches Polyamidfasermaterial in roten Farbtönen.

Beispiele 23 bis 42: In analoger Weise zu den Angaben in Beispiel 22 können die in der folgenden Tabelle 3 in Spalte 2 in Form der freien Säure angegebenen Farbstoffe erhalten werden, welche Wolle und synthetisches Polyamidfasermaterial in den in Spalte 3 angegebenen Farbtönen färben. Im Falle der einen Rest der Formel -NH-CO-CHBr-CH₂Br enthaltenden Farbstoffe erfolgt die erste Kondensation bei einem pH-Wert von ca. 3 und einer Temperatur von ca. 0 bis 5°C. Im Falle der einen Rest der Formel -SO₂-CH₂CH₂-OSO₃H enthaltenden Farbstoffe erfolgt die erste Kondensation bei einem pH-Wert von ca. 6 und einer Temperatur von ca. 30°C.

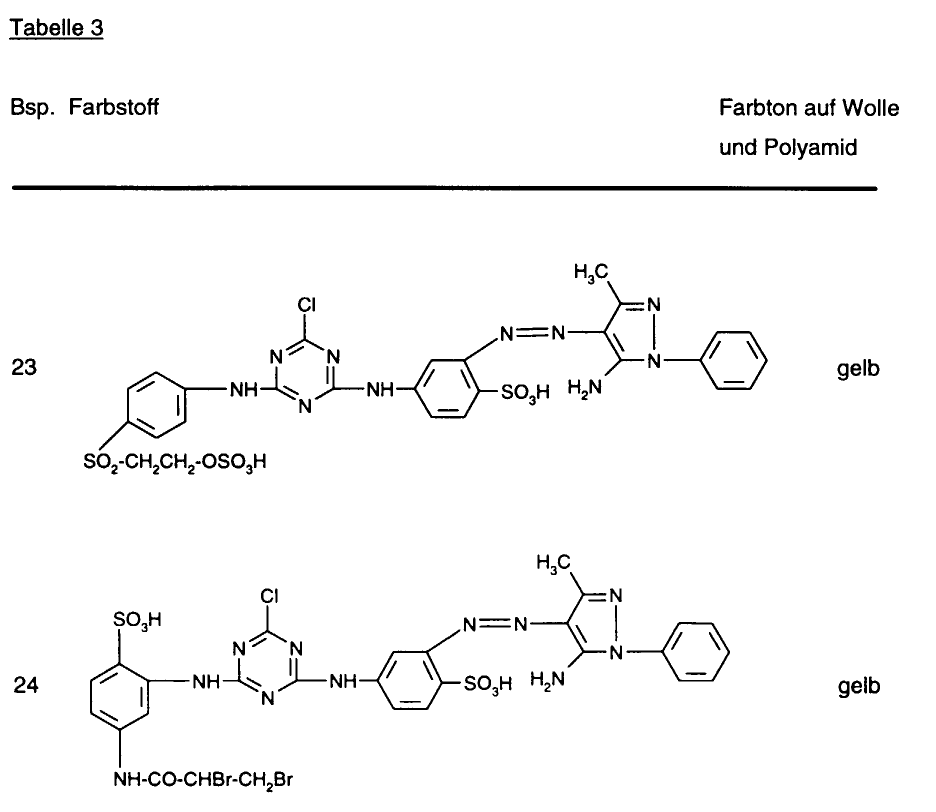

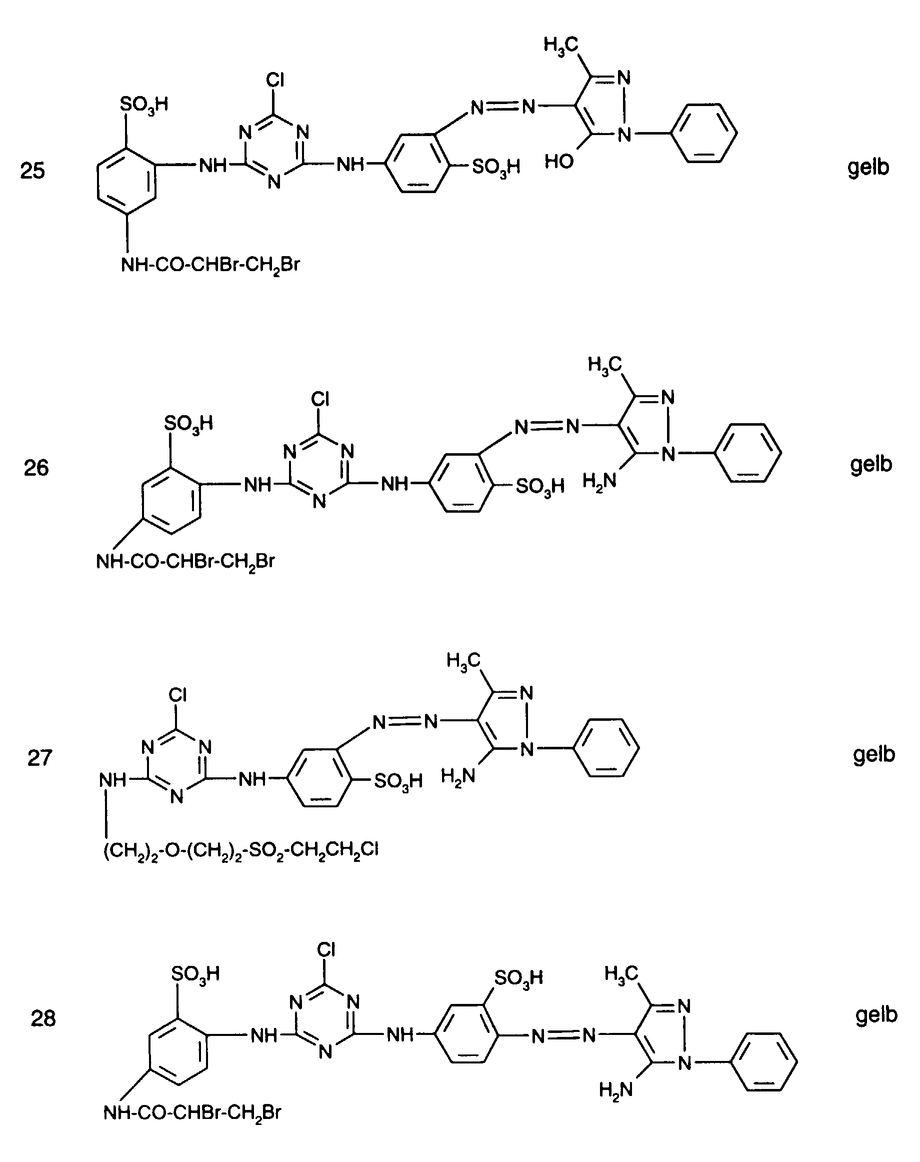

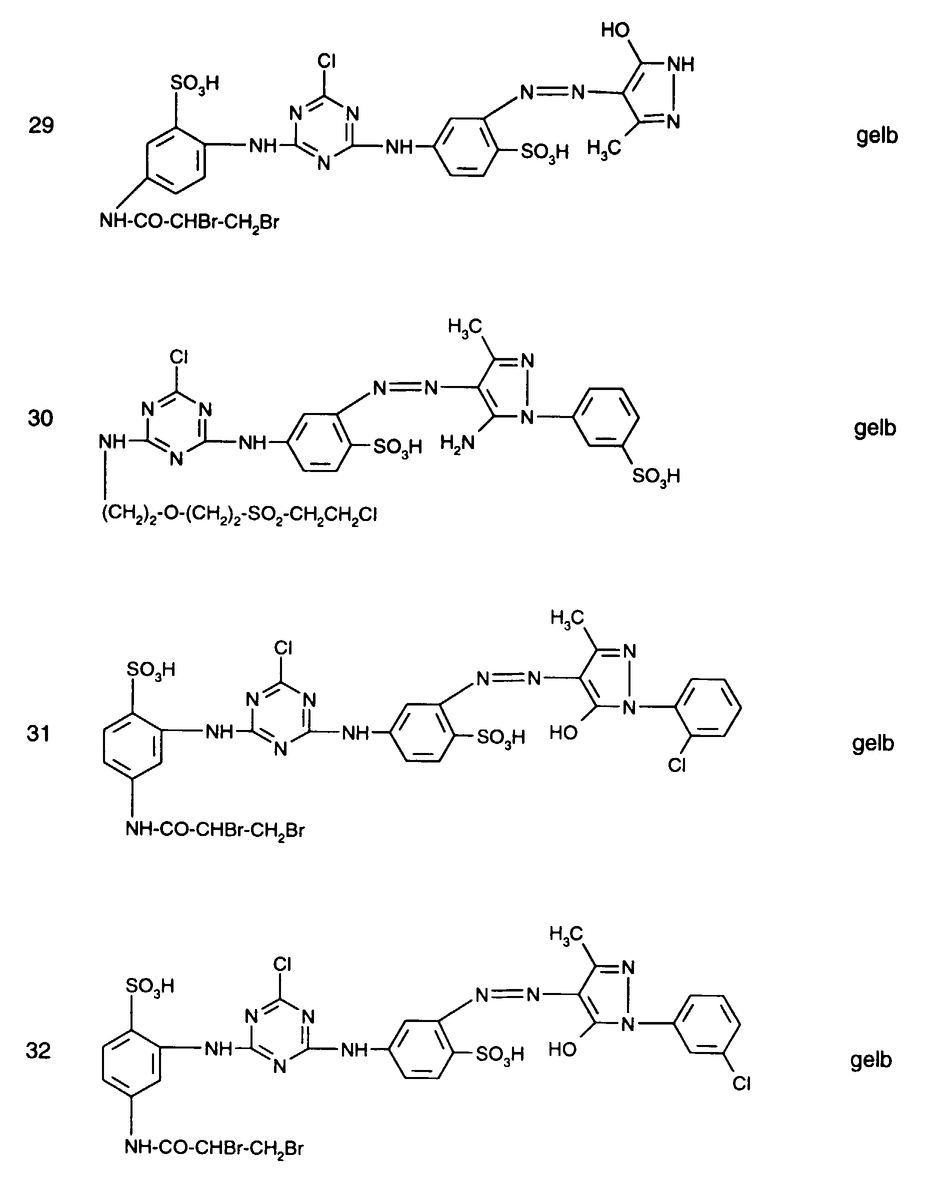

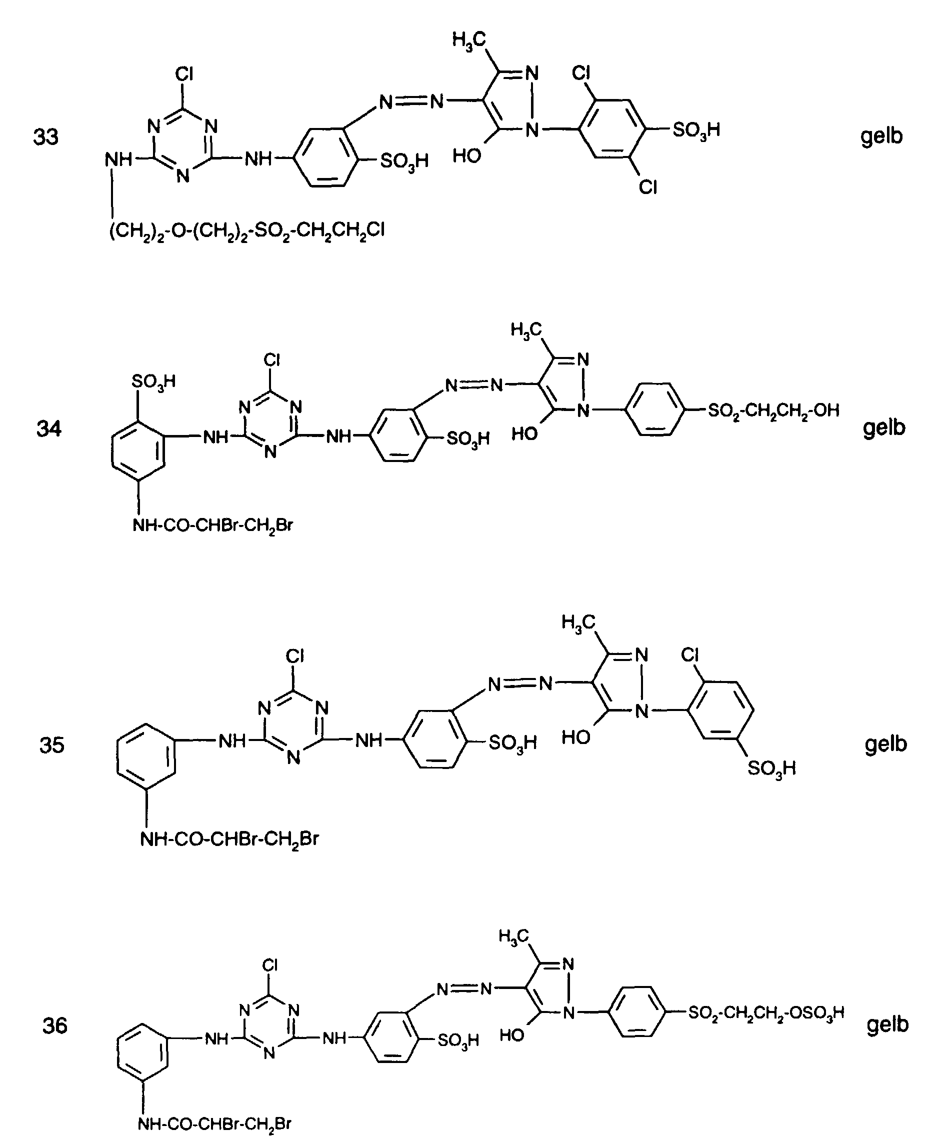

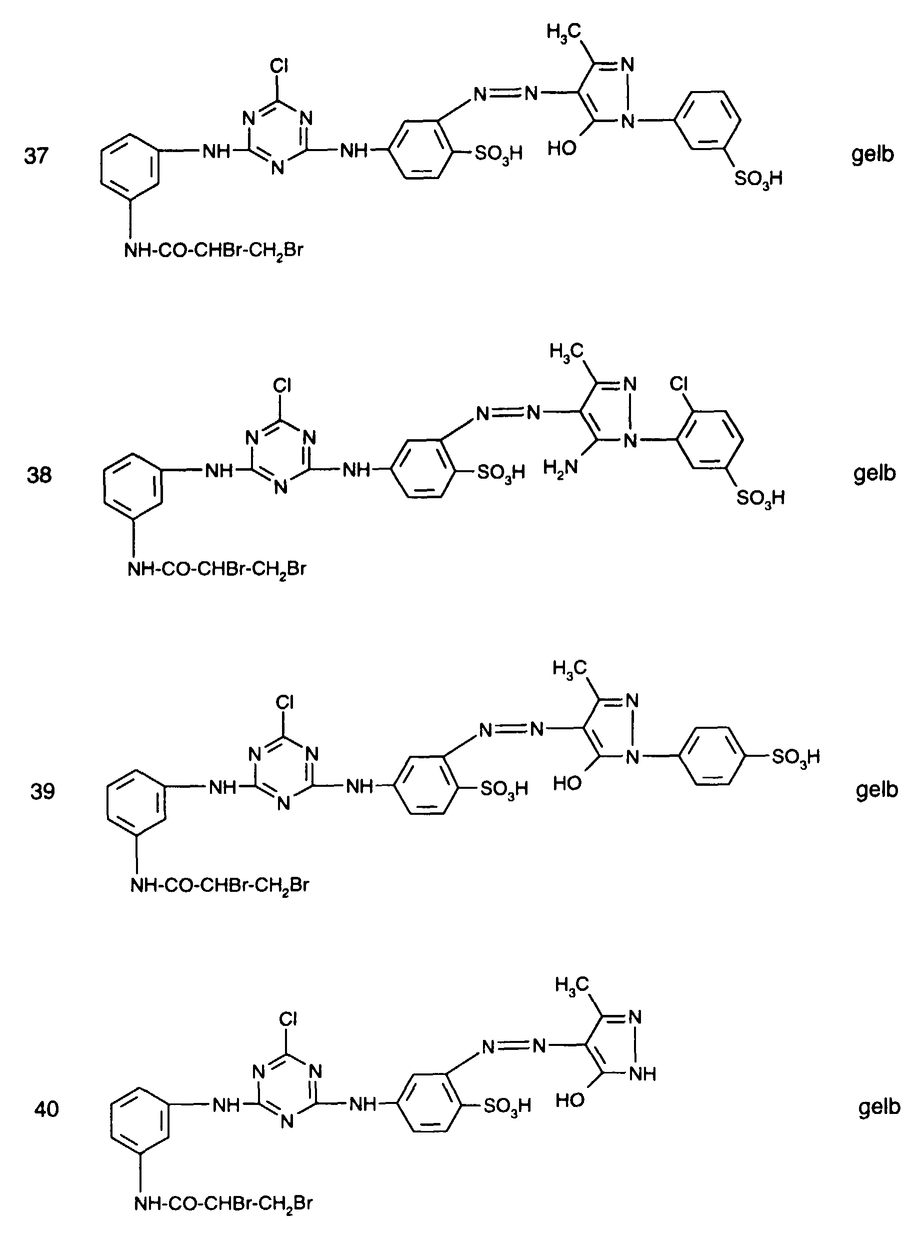

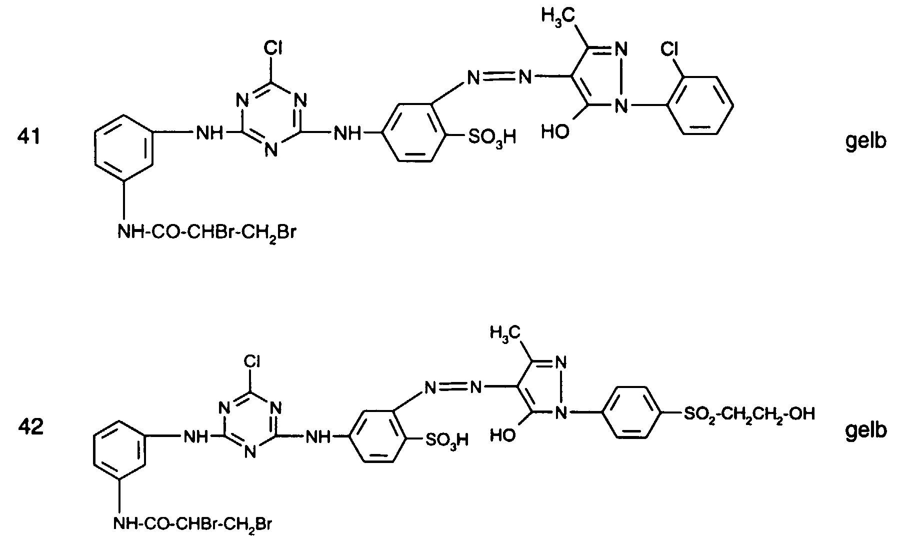

Beispiel 43: 9,8 Teile des gemäss Beispiel 1 erhältlichen Farbstoffs werden in 100 Teilen Wasser bei einer Temperatur von 60 bis 70°C verrührt. Der pH wird durch Zugabe einer wässrigen, 1-normalen Natriumhydroxidlösung bei einem Wert von 7 gehalten und es wird insgesamt 135 Minuten unter diesen Bedingungen acryliert. Anschliessend wird auf Raumtemperatur abgekühlt, nach Zugabe von Kaliumchlorid 30 Minuten nachgerührt, der erhaltene Farbstoff abfiltriert, dieser mit 100 Teilen einer wässrigen Kaliumchloridlösung nachgewaschen und bei einer Temperatur von 30°C getrocknet. Man erhält einen Farbstoff, welcher in Form der freien Säure der Verbindung der Formel 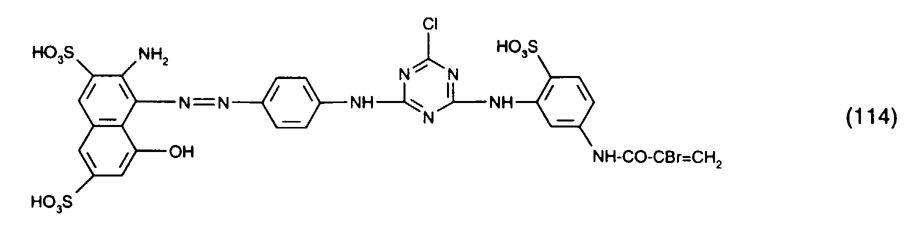 entspricht. Der Farbstoff der Formel (114) färbt Wolle und synthetisches Polyamidfasermaterial in gelben Farbtönen.

Beispiele 44 bis 78: In analoger Weise zu den Angaben in Beispiel 43 können die in der folgenden Tabelle 4 in Spalte 2 in Form der freien Säure angegebenen Farbstoffe erhalten werden, welche Wolle und synthetisches Polyamidfasermaterial in den in Spalte 3 angegebenen Farbtönen färben. Falls die Farbstoffe keinen Rest der Formel -NH-CO-CBr=CH₂ enthalten erfolgt die Vinylierung bei einem pH-Wert von ca. 8 bis 10 und einer Temperatur von ca. 25°C.

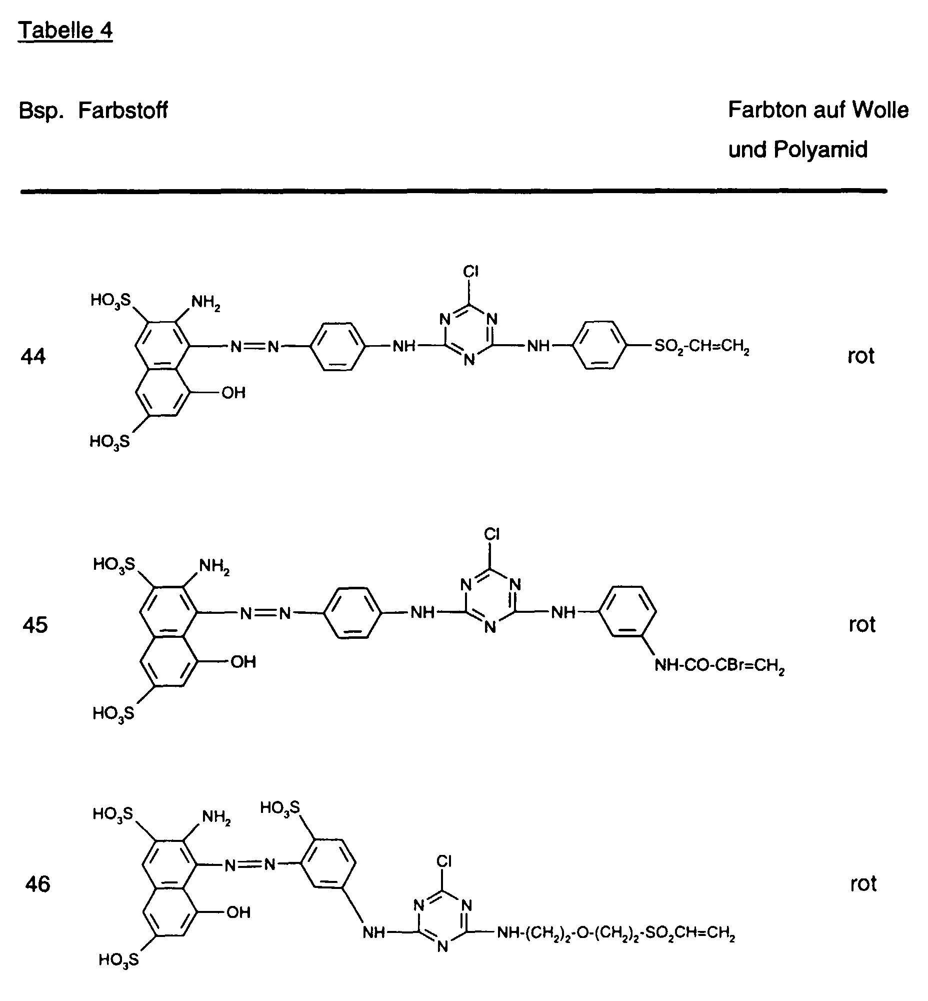

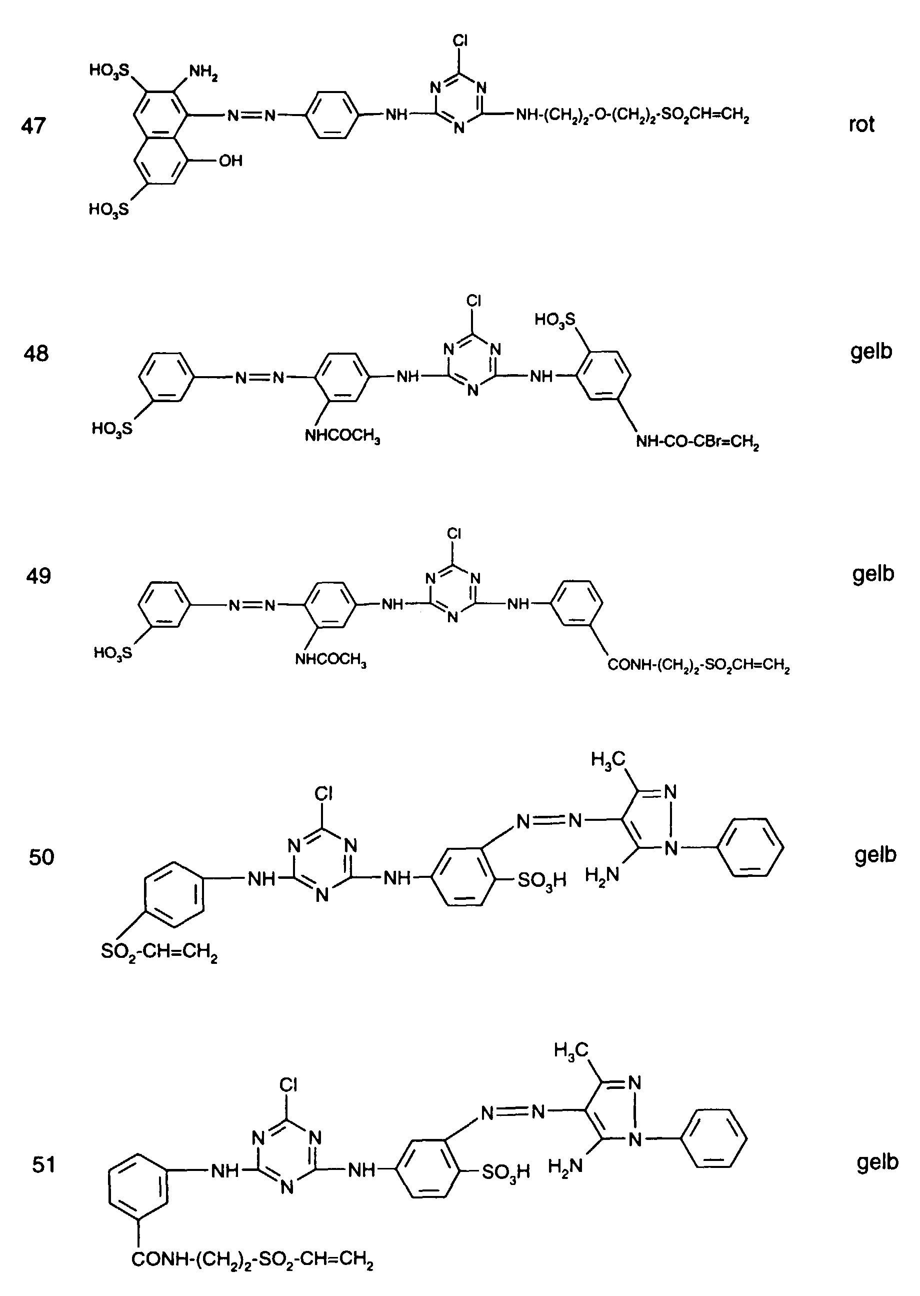

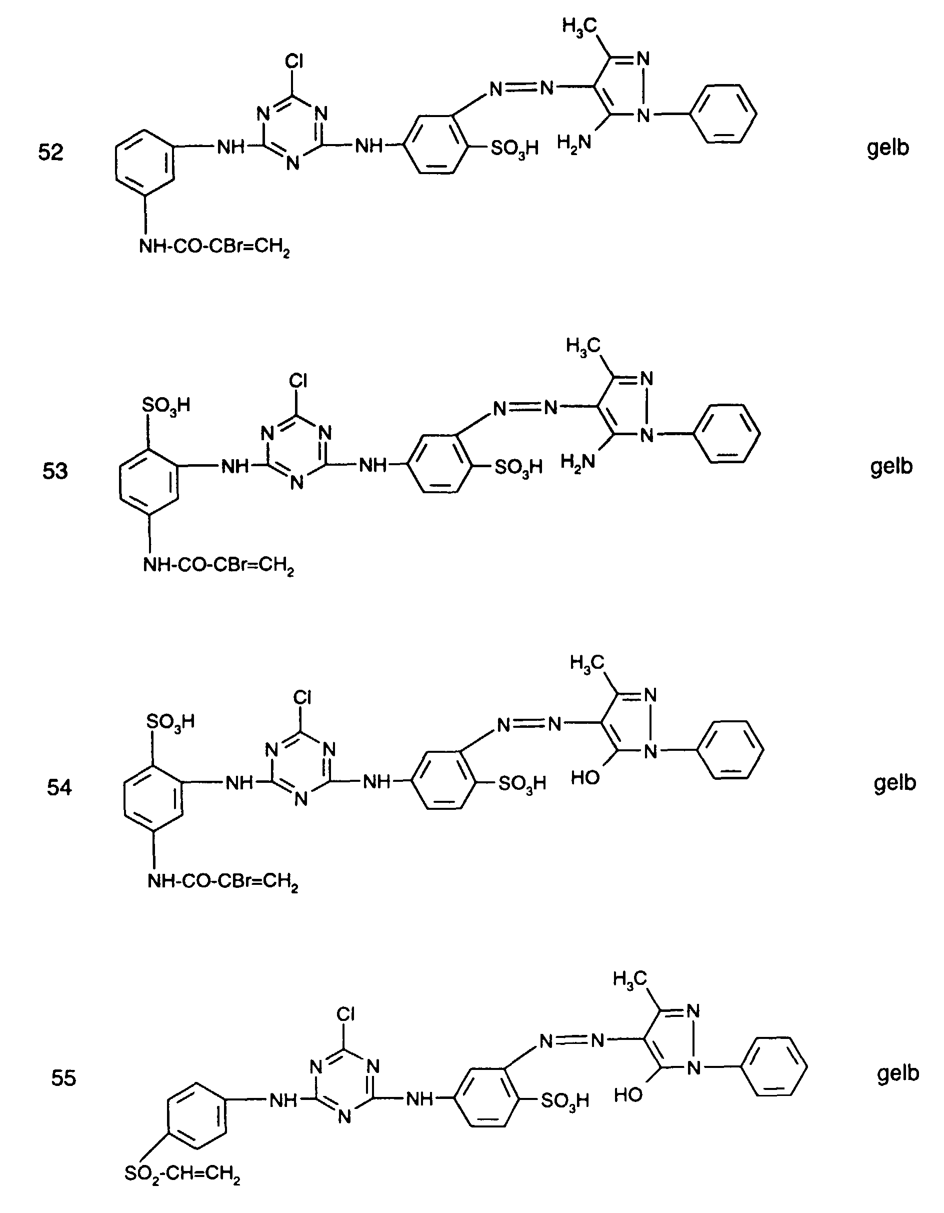

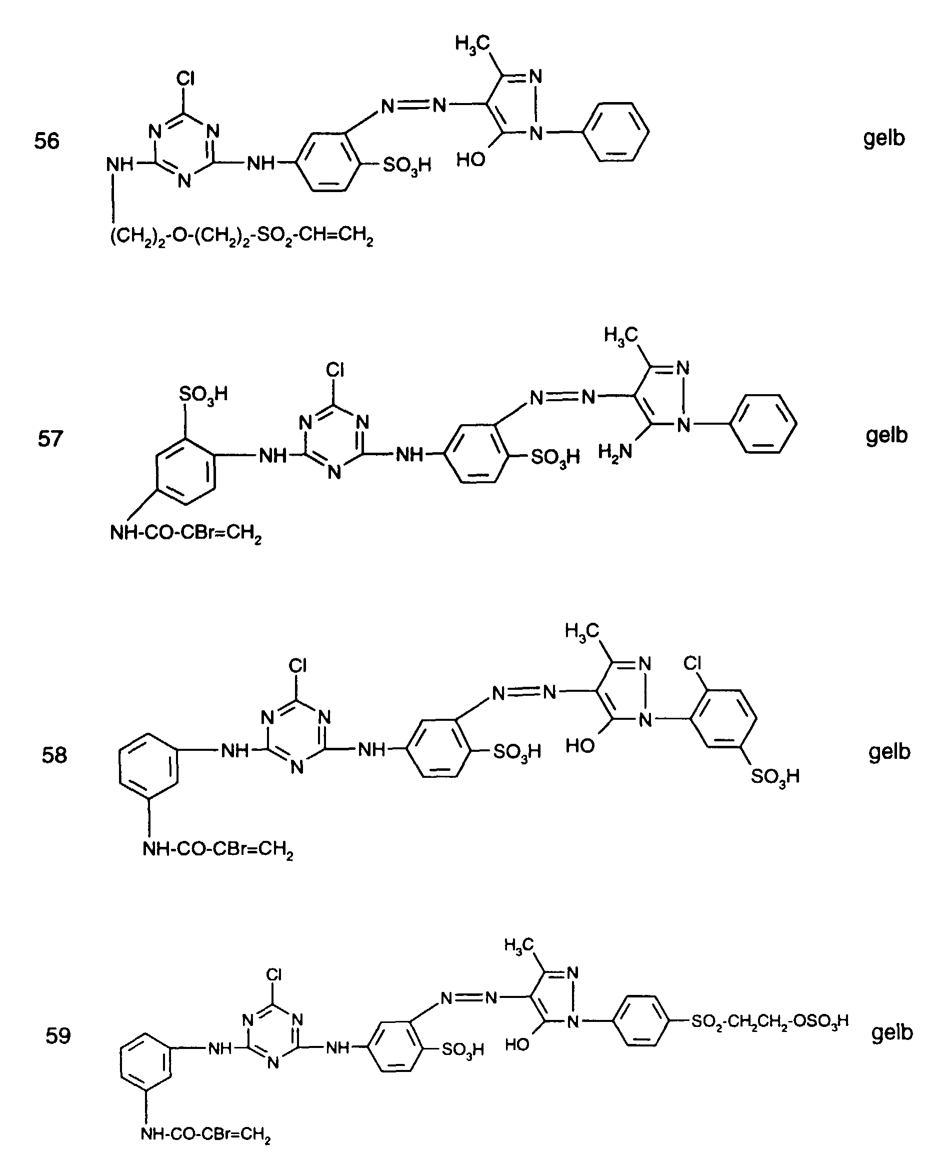

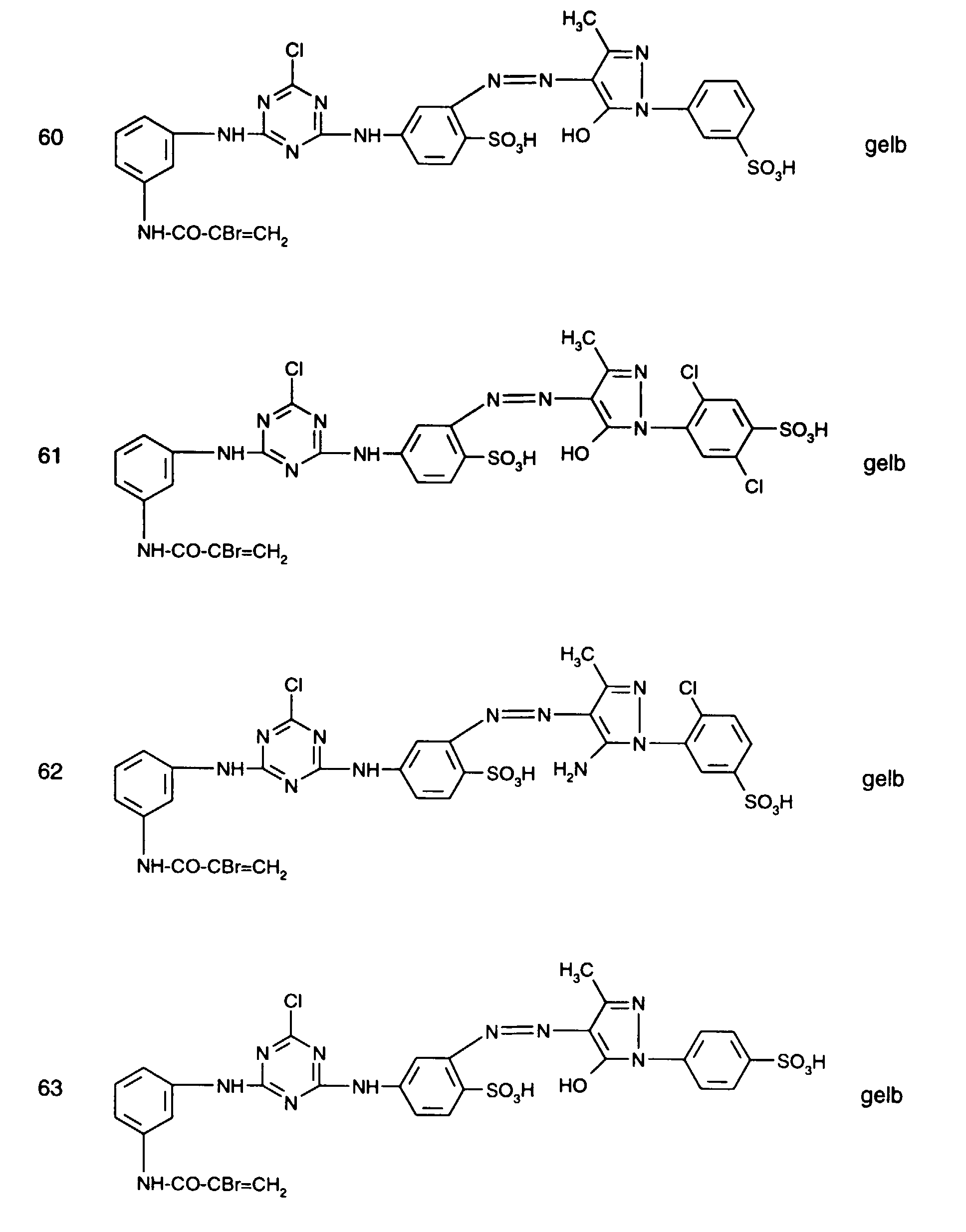

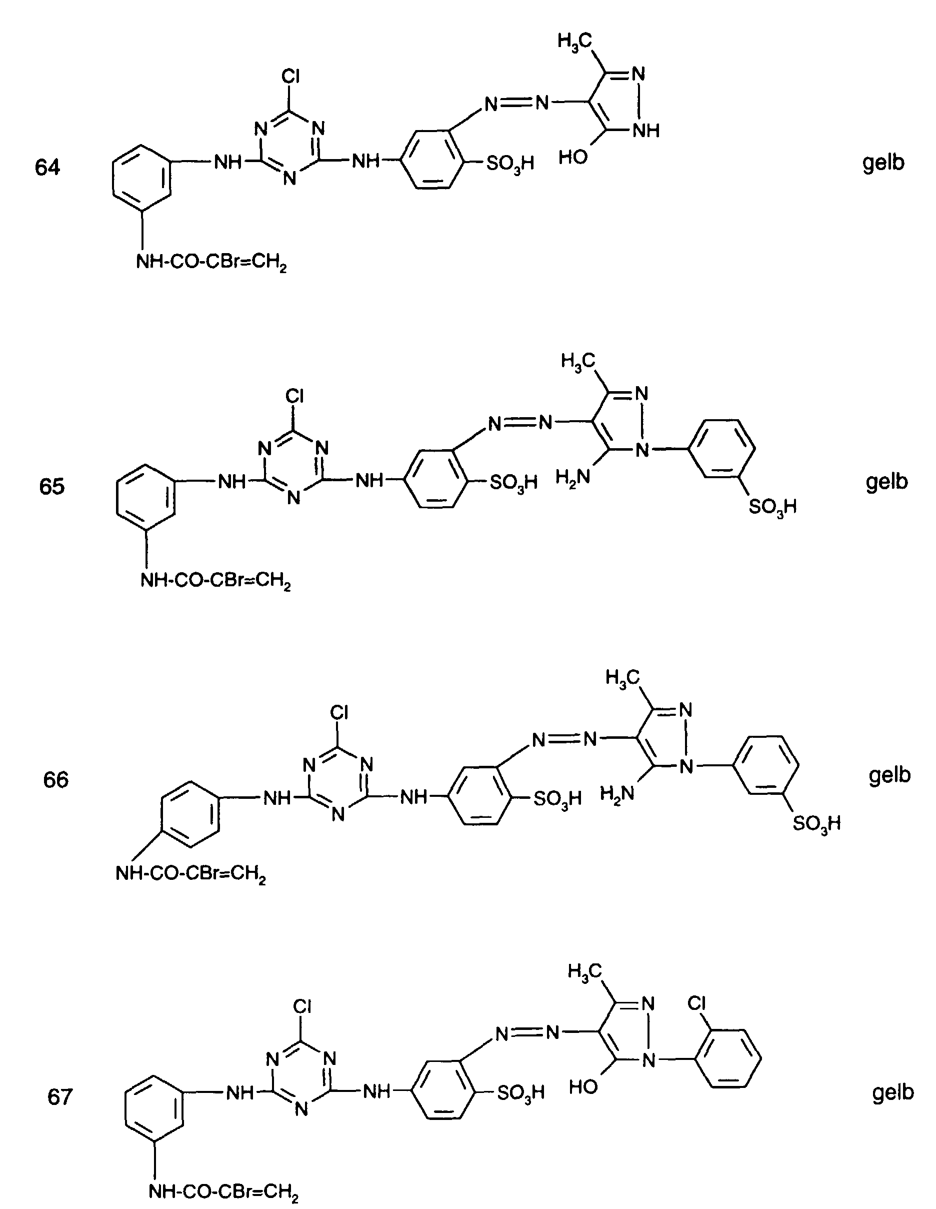

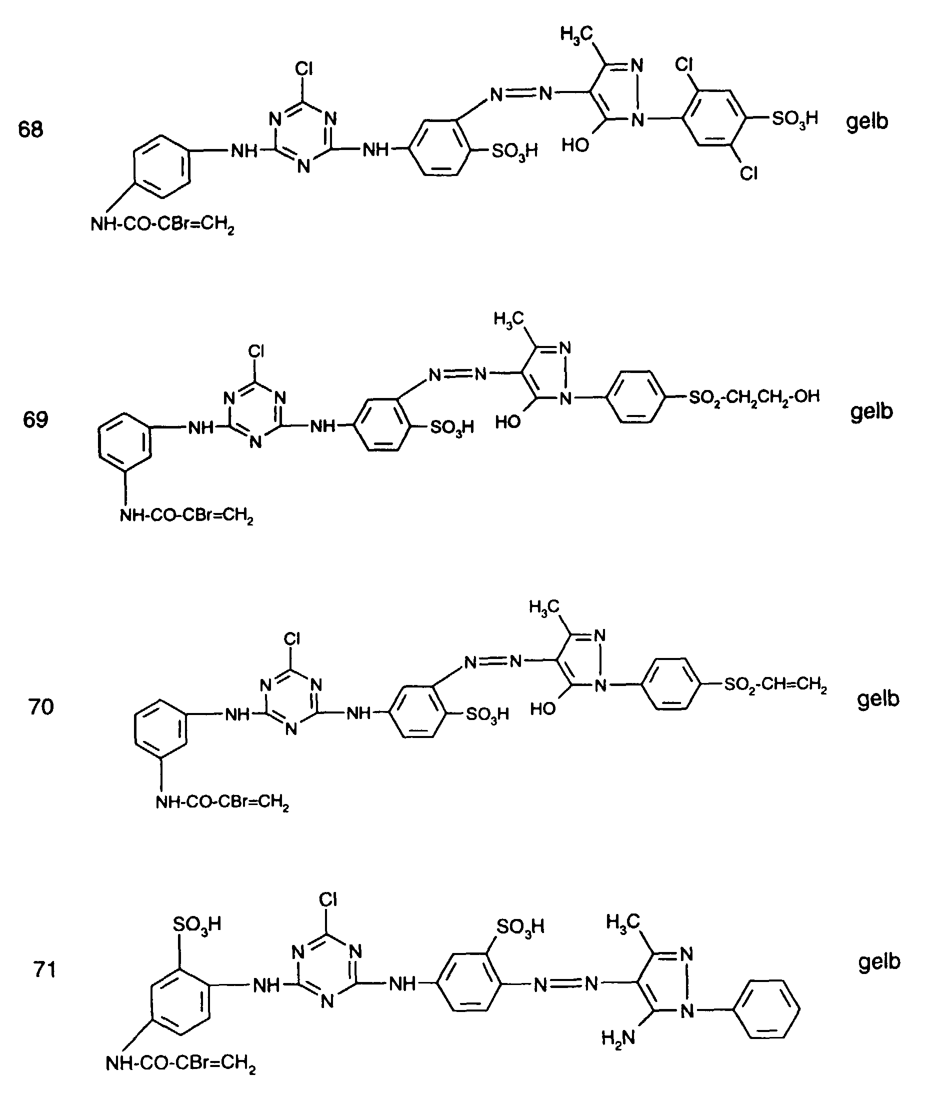

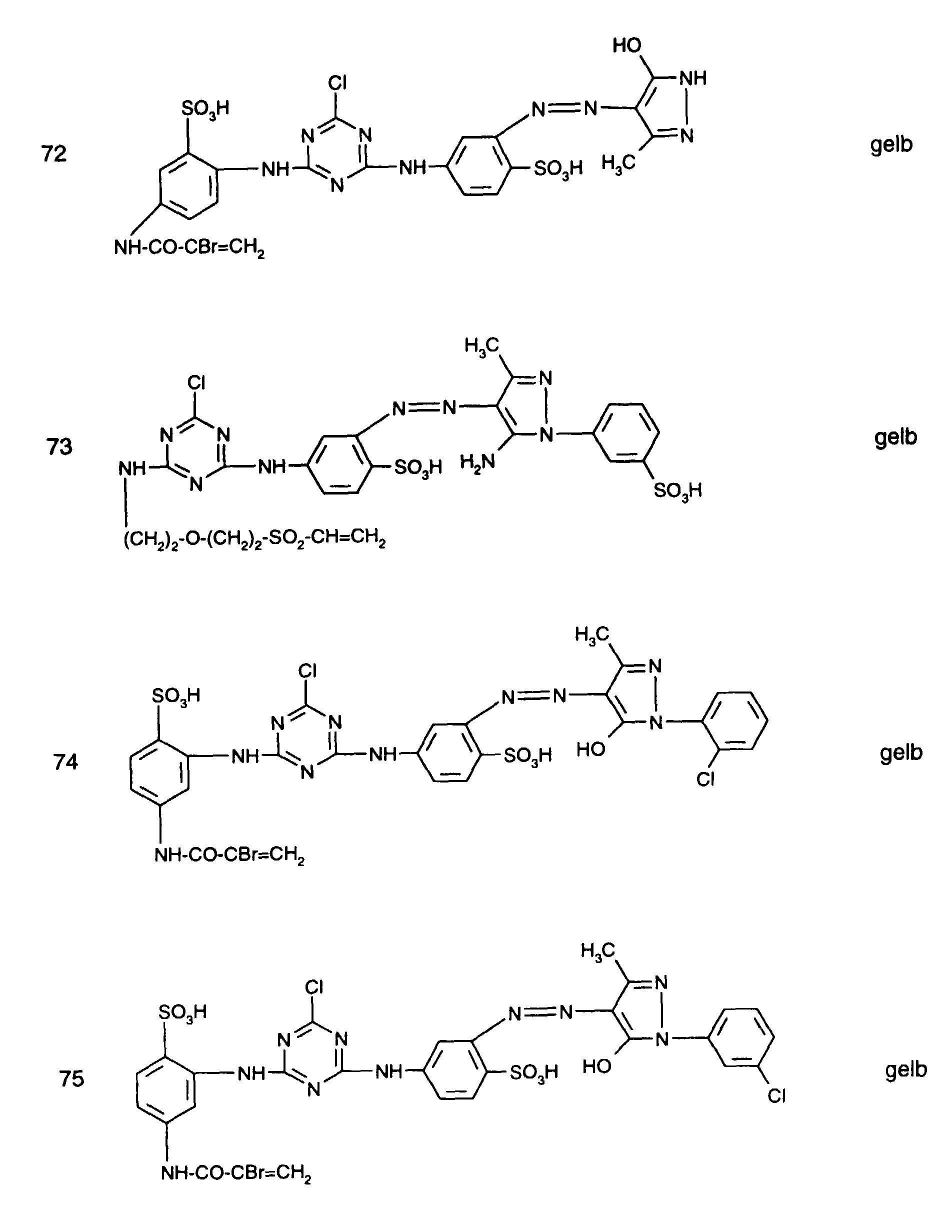

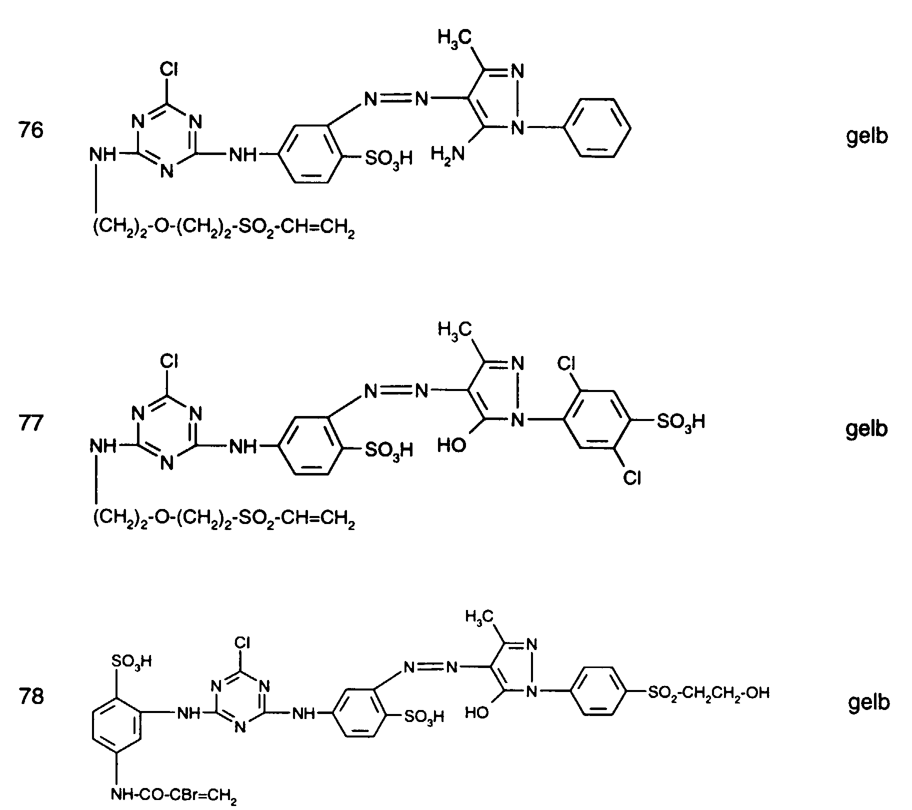

### Färbevorschrift

Es werden 0,1 Teile des Farbstoffs gemäss Beispiel 1 in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschliessend geschleudert und getrocknet. Man erhält eine rote Färbung, die gute Licht- und Nassechtheiten sowie eine gute Faseregalität aufweist.

## Patentansprüche

1. Reaktivfarbstoffe der Formel 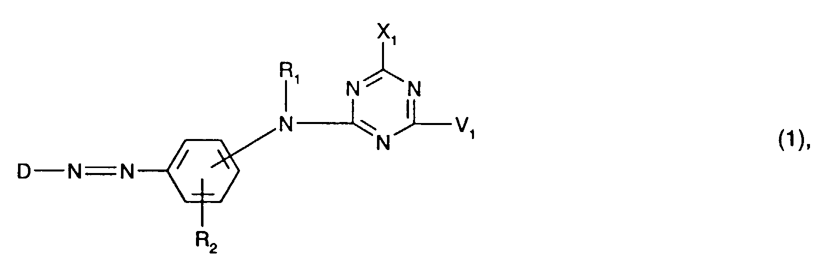 worin
R₁ Wasserstoff oder gegebenenfalls substituiertes C₁-C₄-Alkyl ist,
R₂ Wasserstoff, C₁-C₄-Alkyl, C₁-C₄-Alkoxy, C₂-C₄-Alkanoylamino, Ureido, Halogen oder Sulfo ist,
X₁ Chlor,
V₁ ein Rest der Formel
-NH-(CH₂)₂₋₃-SO₂Z (2a),
-NH-(CH₂)₂₋₃-O-(CH₂)₂₋₃-SO₂Z (2b), 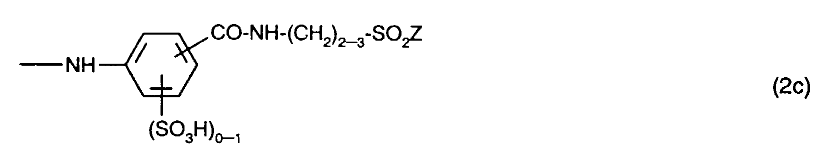
oder 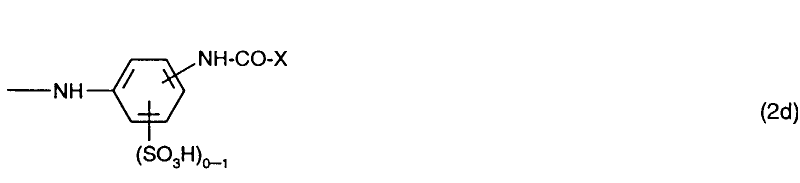 ist,
wobei
Z der Rest -CH=CH₂ oder -CH₂-CH₂-Y und Y eine Abgangsgruppe ist,
X der Rest 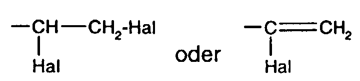 und Hal Halogen ist, und
D ein Rest der Formel 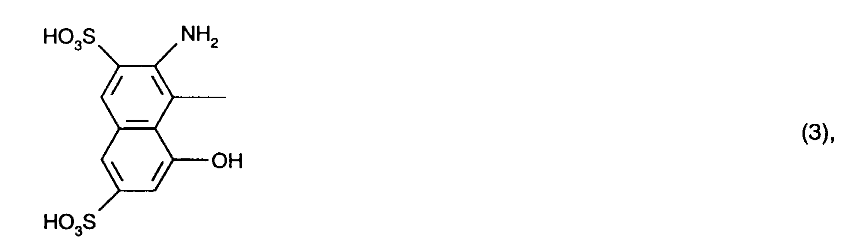 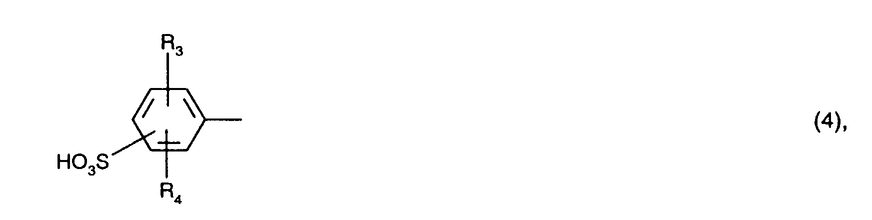 worin
R₃ und R₄ unabhängig voneinander Wasserstoff, C₁-C₄-Alkyl, C₁-C₄-Alkoxy, C₂-C₄-Alkanoylamino, Ureido oder Halogen sind, oder 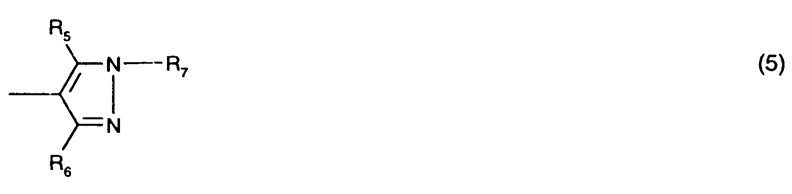 ist,
worin
R₅ Hydroxy oder Amino,
R₆ Methyl oder Carboxy und
R₇ Wasserstoff oder gegebenenfalls durch C₁-C₄-Alkyl, C₁-C₄-Alkoxy, C₂-C₄-Alkanoylamino, Ureido, Halogen, Sulfo, β-Hydroxyäthylsulfonyl oder einen Rest der Formel -SO₂Z substituiertes Phenyl ist, wobei Z die obigen Bedeutungen hat,
mit der Massgabe dass,
falls V₁ ein Rest der Formel (2a) und D ein Rest der Formel (3) ist, R₂ nicht Sulfo bedeutet, und,
falls V₁ ein Rest der Formel (2a), (2b) oder (2c) und D ein Rest der Formel (5) ist, R₇ Wasserstoff oder Phenyl bedeutet, und
falls V₁ ein Rest der Formel (2d) und D ein Rest der Formel (5) ist, der Reaktivfarbstoff der Formel (1) nicht mehr als zwei Sulfogruppen enthält.

2. Reaktivfarbstoffe der Formel 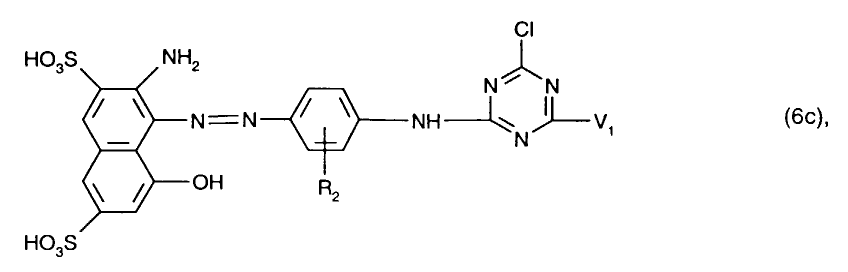 worin R₂ Wasserstoff, C₁-C₄-Alkyl, C₁-C₄-Alkoxy, C₂-C₄-Alkanoylamino, Ureido oder Halogen, insbesondere Wasserstoff, und
V₁ ein Rest der Formel 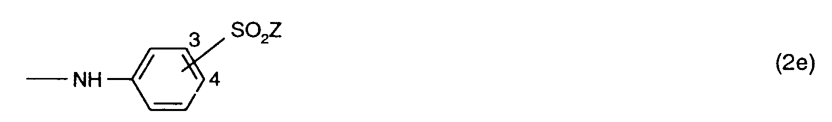 ist, worin Z der Rest -CH=CH₂ oder -CH₂-CH₂-Y und Y eine Abgangsgruppe ist, und der Rest -SO₂Z in Formel (2e) in der bezeichneten 3- oder 4-Position gebunden ist,
oder Reaktivfarbstoffe der Formel 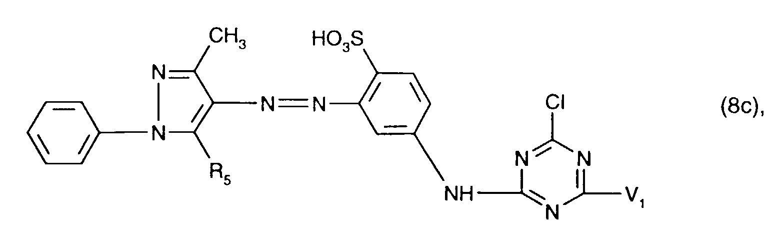 worin R₅ Amino oder insbesondere Hydroxy, und
V₁ ein Rest der oben angegebenen Formel (2e) ist.

3. Reaktivfarbstoffe gemäss Anspruch 1, dadurch gekennzeichnet, dass R₁ Wasserstoff oder gegebenenfalls durch Hydroxy, Sulfo oder Sulfato substituiertes C₁-C₄-Alkyl ist.

4. Reaktivfarbstoffe gemäss einem der Ansprüche 1 und 3, dadurch gekennzeichnet, dass R₁ Wasserstoff oder C₁-C₄-Alkyl, insbesondere Wasserstoff, ist.

5. Reaktivfarbstoffe gemäss einem der Ansprüche 1, 3 und 4, dadurch gekennzeichnet, dass R₃ und R₄ Wasserstoff sind.

6. Reaktivfarbstoffe gemäss einem der Ansprüche 1 bis 5, dadurch gekennzeichnet, dass Y -Cl oder -OSO₃H ist.

7. Reaktivfarbstoffe gemäss einem der Ansprüche 1 und 3 bis 6, dadurch gekennzeichnet, dass Hal Chlor oder Brom, insbesondere Brom, ist.

8. Reaktivfarbstoffe gemäss Anspruch 1 der Formel 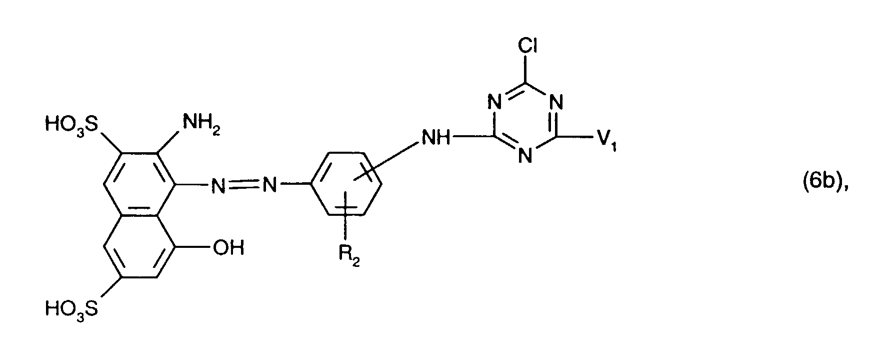 worin R₂ Wasserstoff, C₁-C₄-Alkyl, C₁-C₄-Alkoxy, C₂-C₄-Alkanoylamino, Ureido oder Halogen, insbesondere Wasserstoff, ist und
V₁ die in Anspruch 1 angegebenen Bedeutungen hat.

9. Reaktivfarbstoffe gemäss Anspruch 1 der Formel 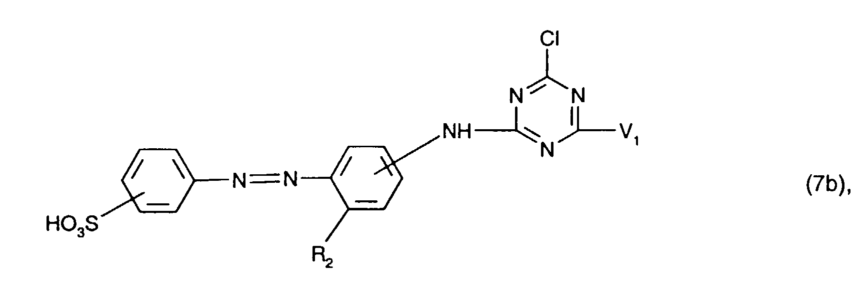 worin R₂ C₁-C₄-Alkyl, C₁-C₄-Alkoxy, C₂-C₄-Alkanoylamino, Ureido oder Halogen, insbesondere C₂-C₄-Alkanoylamino, ist und
V₁ die in Anspruch 1 angegebenen Bedeutungen hat.

10. Reaktivfarbstoffe gemäss Anspruch 1 der Formel 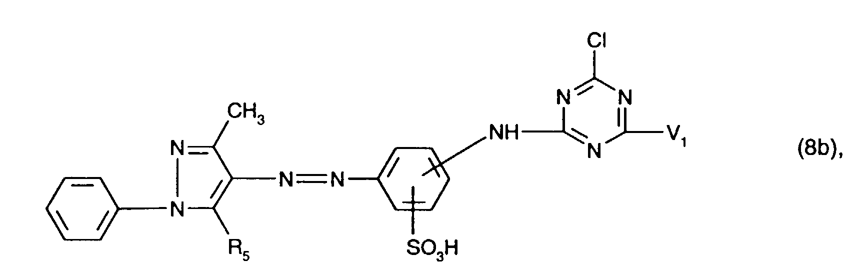 worin R₅ die in Anspruch 1 angegebenen Bedeutungen hat und V₁ ein Rest der Formel (2a), (2b) oder (2c) ist.

11. Reaktivfarbstoffe gemäss Anspruch 1 der Formel 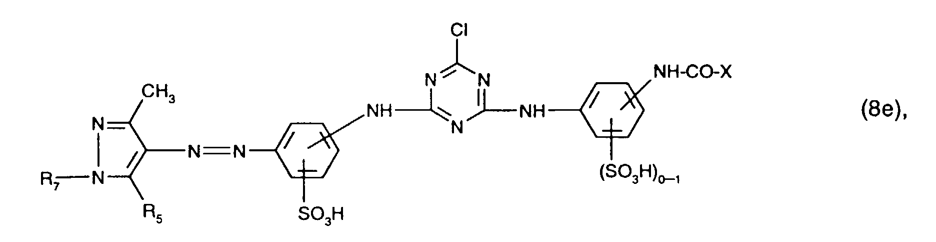 worin R₅, R₇ und X die in Anspruch 1 angegebenen Bedeutungen haben und wobei die Reaktivfarbstoffe der Formel (8e) nur eine oder zwei Sulfogruppen enthalten.

12. Reaktivfarbstoffe gemäss einem der Ansprüche 1 und 3 bis 9, dadurch gekennzeichnet, dass V₁ ein Rest der Formel (2c) oder (2d) ist.

13. Reaktivfarbstoffe gemäss einem der Ansprüche 1 und 3 bis 9, dadurch gekennzeichnet, dass V₁ ein Rest der Formel (2d) ist.

14. Verfahren zur Herstellung von Reaktivfarbstoffen gemäss Anspruch 1, dadurch gekennzeichnet, dass man Verbindungen der Formeln 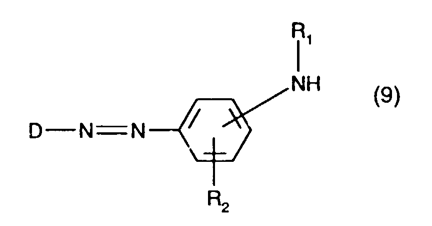 und
H-V₁ (10)
mit Cyanurchlorid umsetzt und gegebenenfalls eine Umwandlungsreaktion anschliesst, wobei R₁, R₂ und V₁ die in Anspruch 1 angegebenen Bedeutungen haben.

15. Verwendung der Reaktivfarbstoffe gemäss einem der Ansprüche 1 bis 13 bzw. der gemäss Anspruch 14 erhaltenen Reaktivfarbstoffe zum Färben oder Bedrucken von hydroxylgruppenhaltigen oder stickstoffhaltigen Fasermaterialien.

16. Verwendung gemäss Anspruch 15 zum Färben oder Bedrucken von natürlichem oder synthetischem Poylamidfasermaterial.

## Claims

1. A reactive dye of the formula 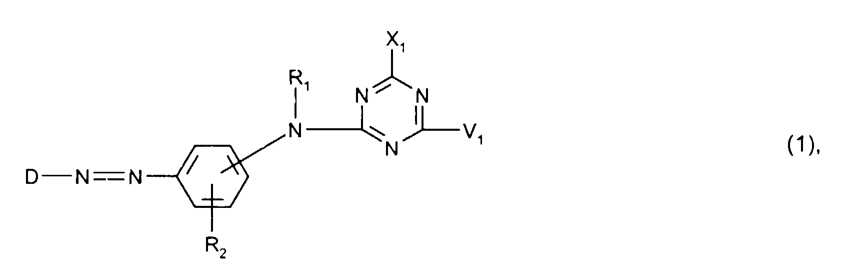 in which
R₁ is hydrogen or substituted or unsubstituted C₁-C₄alkyl,
R₂ is hydrogen, C₁-C₄alkyl, C₁-C₄alkoxy, C₂-C₄alkanoylamino, ureido, halogen or sulfo,
X₁ is chlorine,
V₁ is a radical of the formula
-NH-(CH₂)₂₋₃-SO₂Z (2a),
-NH-(CH₂)₂₋₃-O-(CH₂)₂₋₃-SO₂Z (2b), 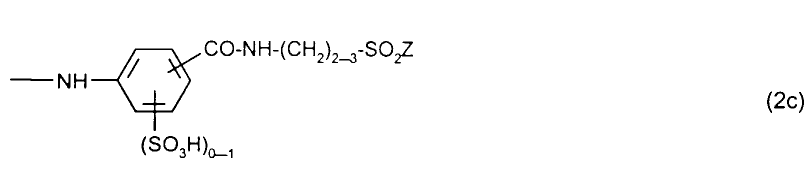
or 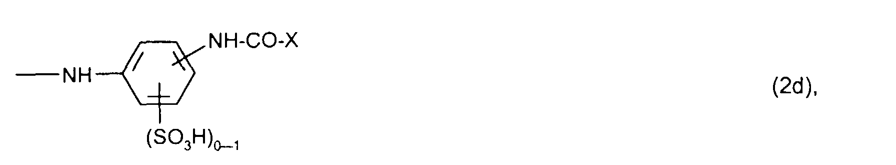 in which
Z is the radical -CH=CH₂ or -CH₂-CH₂-Y and Y is a leaving group,
X is the radical 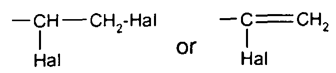 and Hal is halogen, and
D is a radical of the formula 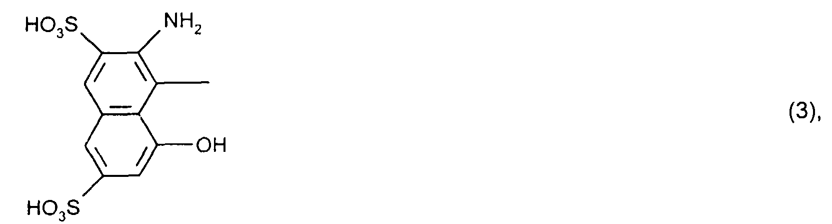 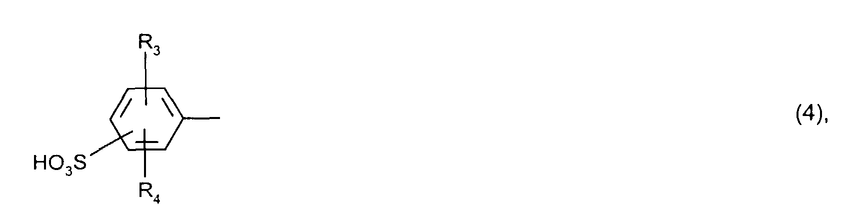 in which R₃ and R₄ independently of one another are hydrogen, C₁-C₄alkyl, C₁-C₄alkoxy, C₂-C₄alkanoylamino, ureido or halogen, or 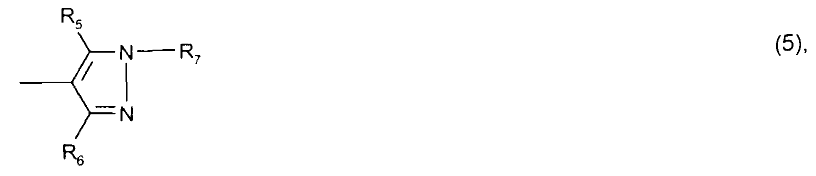 in which R₅ is hydroxyl or amino,
R₆ is methyl or carboxyl and
R₇ is hydrogen or phenyl which is unsubstituted or substituted by C₁-C₄alkyl, C₁-C₄alkoxy, C₂-C₄alkanoylamino, ureido, halogen, sulfo, β-hydroxyethylsulfonyl or a radical of the formula -SO₂Z, in which Z is as defined above,
with the proviso that,
if V₁ is a radical of the formula (2a) and D is a radical of the formula (3), R₂ is not sulfo, and
if V₁ is a radical of the formula (2a), (2b) or (2c) and D is a radical of the formula (5), R₇ is hydrogen or phenyl, and
if V₁ is a radical of the formula (2d) and D is a radical of the formula (5), the reactive dye of the formula (1) contains not more than two sulfo groups.

2. A reactive dye of the formula 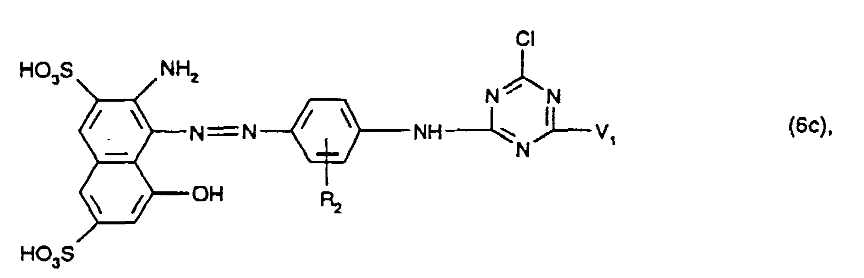 in which R₂ is hydrogen, C₁-C₄alkyl, C₁-C₄alkoxy, C₂-C₄alkanoylamino, ureido or halogen, in particular hydrogen, and
V₁ is a radical of the formula 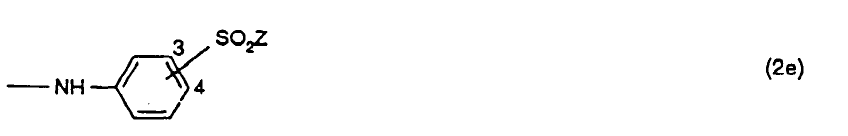 in which Z is the radical -CH=CH₂ or -CH₂-CH₂-Y and Y is a leaving group, and the radical -SO₂Z in formula (2e) is bonded in the 3- or 4-position shown,
or a reactive dye of the formula 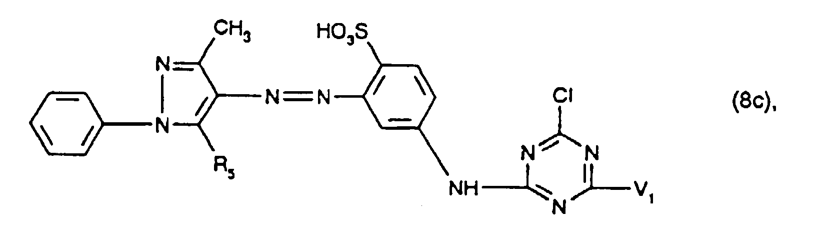 in which R₅ is amino or, in particular, hydroxyl, and
V₁ is a radical of the formula (2e) given above.

3. A reactive dye according to claim 1, in which
R₁ is hydrogen or C₁-C₄alkyl which is unsubstituted or substituted by hydroxyl, sulfo or sulfato.

4. A reactive dye according to claim 1 or 3, in which
R₁ is hydrogen or C₁-C₄alkyl, in particular hydrogen.

5. A reactive dye according to any one of claims 1, 3 and 4, in which
R₃ and R₄ are hydrogen.

6. A reactive dye according to any one of claims 1 to 5, in which
Y is -Cl or -OSO₃H.

7. A reactive dye according to any one of claims 1 and 3 to 6, in which
Hal is chlorine or bromine, in particular bromine.

8. A reactive dye according to claim 1, of the formula 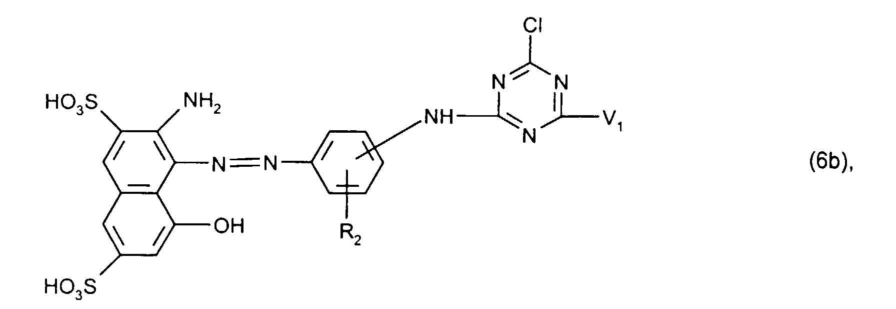 in which R₂ is hydrogen, C₁-C₄alkyl, C₁-C₄alkoxy, C₂-C₄alkanoylamino, ureido or halogen, in particular hydrogen, and
V₁ is as defined in claim 1.

9. A reactive dye according to claim 1, of the formula 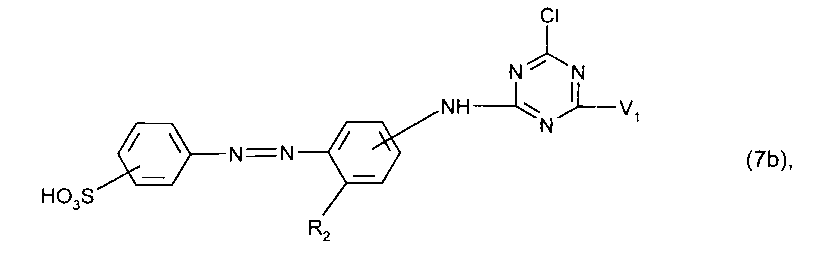 in which R₂ is C₁-C₄alkyl, C₁-C₄alkoxy, C₂-C₄alkanoylamino, ureido or halogen, in particular C₂-C₄alkanoylamino, and
V₁ is as defined in claim 1.

10. A reactive dye according to claim 1, of the formula 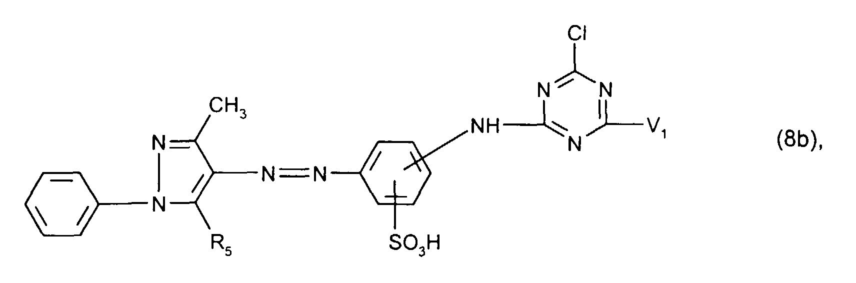 in which R₅ is as defined in claim 1 and V₁ is a radical of the formula (2a), (2b) or (2c).

11. A reactive dye according to claim 1, of the formula 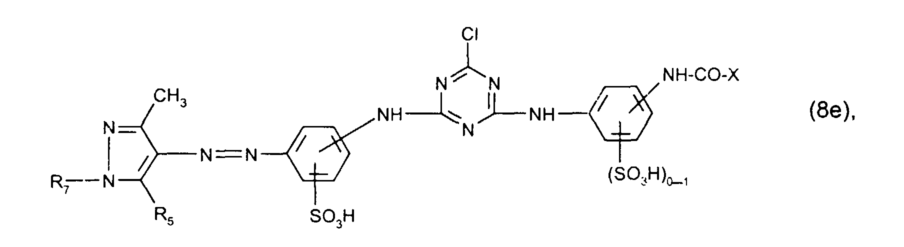 in which R₅, R₇ and X are as defined in claim 1, which contains only one or two sulfo groups.

12. A reactive dye according to any one of claims 1 and 3 to 9, in which
V₁ is a radical of the formula (2c) or (2d).

13. A reactive dye according to any one of claims 1 and 3 to 9, in which
V₁ is a radical of the formula (2d).

14. A process for the preparation of a reactive dye according to claim 1, which comprises reacting compounds of the formulae 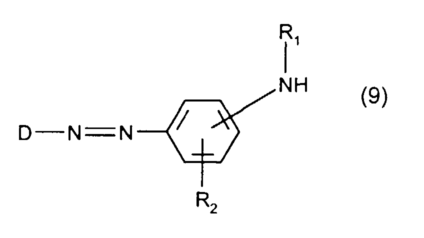 and
H-V₁ (10)
with cyanuric chloride and, if appropriate, subsequently carrying out a conversion reaction, where R₁, R₂ and V₁ are as defined in claim 1.

15. The use of a reactive dye according to any one of claims 1 to 13 or of a reactive dye obtained according to claim 14 for dyeing or printing fibre materials containing hydroxyl groups or containing nitrogen.

16. The use according to claim 15 for dyeing or printing natural or synthetic polyamide fibre material.

## Revendications

1. Colorants réactifs de formule 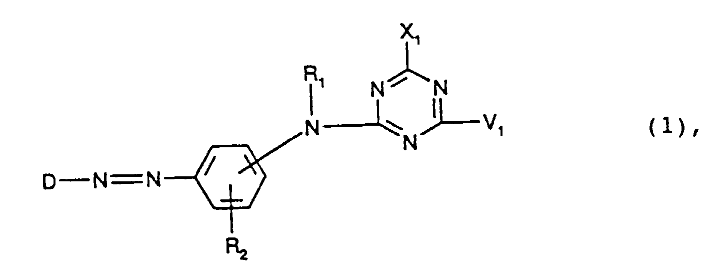 où
R₁ représente un atome d'hydrogène ou un groupe alkyle en C₁-C₄ éventuellement substitué,
R₂ représente un atome d'hydrogène, des groupes alkyle en C₁-C₄, alkoxy en C₁-C₄, (alcanoyl en C₂-C₄)amino, uréido, halogène ou sulfo,
X₁ représente un atome de chlore,
V₁ représente un reste de formule
-NH-(CH₂)₂₋₃-SO₂Z (2a)
-NH-(CH₂)₂₋₃-O-(CH₂)₂₋₃-SO₂Z (2b) 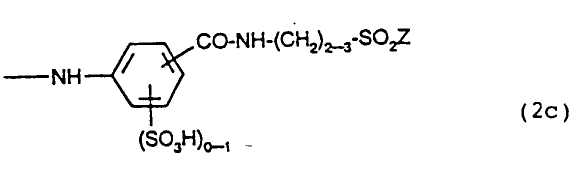
ou 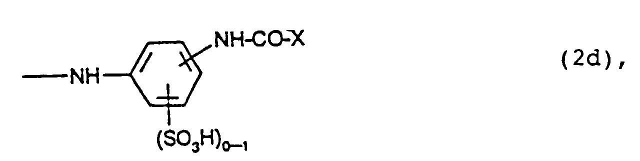
Z représentant le reste -CH=CH₂ ou -CH₂-CH₂-Y et Y étant un groupe partant,
X représentant le reste 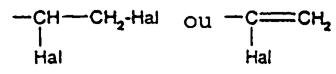 et Hal étant un atome d'halogène, et
D représentant un reste de formule 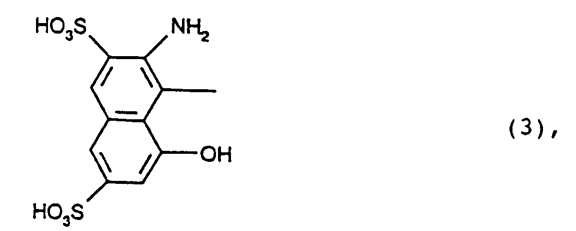 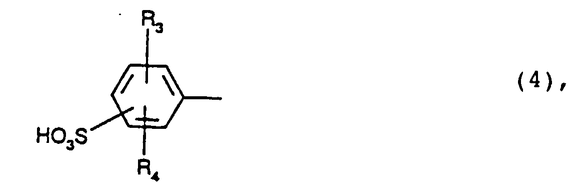 où
R₃ et R₄ représentent, indépendamment l'un de l'autre, des atomes d'hydrogène, des groupes alkyle en C₁-C₄, alkoxy en C₁-C₄, (alcanoyl en C₂-C₄)amino, uréido ou halogène, ou représente 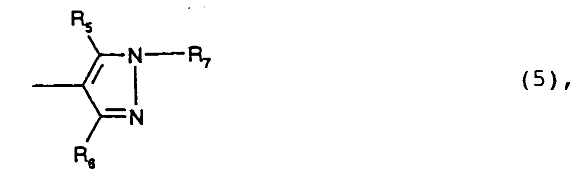 où
R₅ représente des groupes hydroxy ou amino et
R₆ représente des groupes méthyle ou carboxy et
R₇ représente un atome d'hydrogène ou un groupe phényle éventuellement substitué par des substituants alkyle en C₁-C₄, alkoxy en C₁-C₄, (alcanoyl en C₂-C₄)amino, uréido, halogène, sulfo, β-hydroxyéthysulfonyle ou un reste de formule -SO₂Z, Z possédant les significations données ci-dessus,
à la condition que
si V₁ représente un reste de formule (2a) et D un reste de formule (3), R₂ ne représente pas sulfo, et
si V₁ représente un reste de formule (2a), (2b) ou (2c) et D un reste de formule (5), R₇ représente un atome d'hydrogène ou un reste phényle,
si V₁ représente un reste de formule (2d) et D représente un reste de formule (5), le colorant réactif de formule (1) ne présente pas plus de deux groupes sulfo.

2. Colorants réactifs de formule 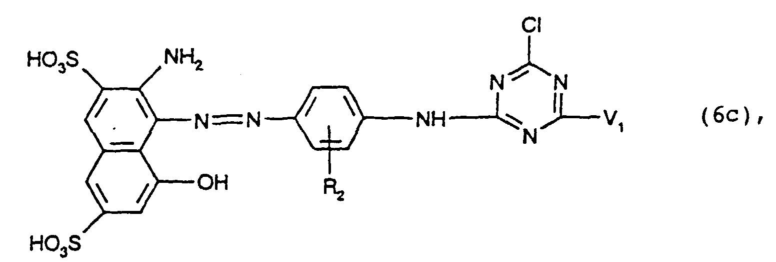 où
R₂ représente un atome d'hydrogène, des groupes alkyle en C₁-C₄, alkoxy en C₁-C₄, (alcanoyl en C₂-C₄)amino, uréido ou halogène, en particulier un atome d'hydrogène, et
V₁ représente un reste de formule 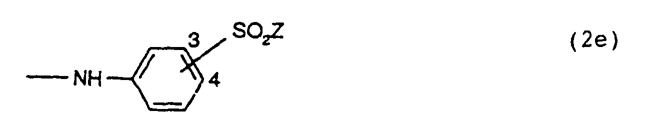 où
Z représente un reste de formule -CH=CH₂ ou -CH₂-CH₂-Y et Y est un groupe partant, et le reste -SO₂Z dans la formule (2e) est lié aux positions indiquées 3 ou 4,
ou des colorants réactifs de formule 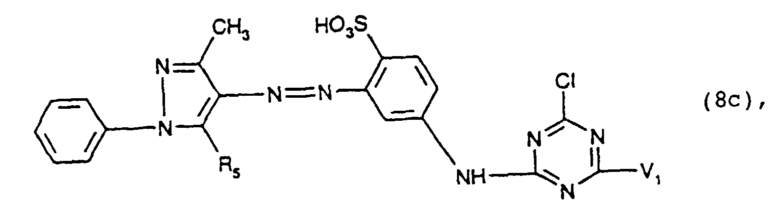 où
R₅ représente des groupes amino ou en particulier hydroxy, et
V₁ représente un reste de formule (2e) donnée ci-dessus.

3. Colorants réactifs selon la revendication 1, caractérisés en ce que
R₁ représente un atome d'hydrogène ou un groupe alkyle en C₁-C₄ éventuellement substitué par des substituantes hydroxy, sulfo ou sulfato.

4. Colorants réactifs selon l'une des revendications 1 et 3, caractérisés en ce que
R₁ représente un atome d'hydrogène ou un groupe alkyle, en particulier un atome d'hydrogène.

5. Colorants réactifs selon l'une des revendications 1, 3 et 4, caractérisés en ce que R₃ et R₄ représentent un atome d'hydrogène.

6. Colorants réactifs selon l'une des revendications 1 à 5, caractérisés en ce que Y représente -Cl ou -OSO₃H.

7. Colorants réactifs selon l'une des revendications 1 et 3 à 6, caractérisés en ce que Hal représente un atome de chlore ou de brome, en particulier de brome.

8. Colorants réactifs selon la revendication 1 de formule 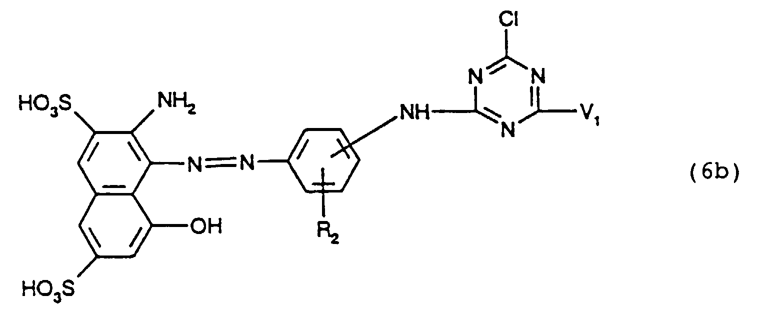 où
R₂ représente un atome d'hydrogène, des groupes alkyle en C₁-C₄, alkoxy en C₁-C₄, (alcanoyl en C₂-C₄)amino, uréido ou halogène, en particulier un atome d'hydrogène, et
V₁ possède les significations données à la revendication 1.

9. Colorants réactifs selon la revendication 1 de formule 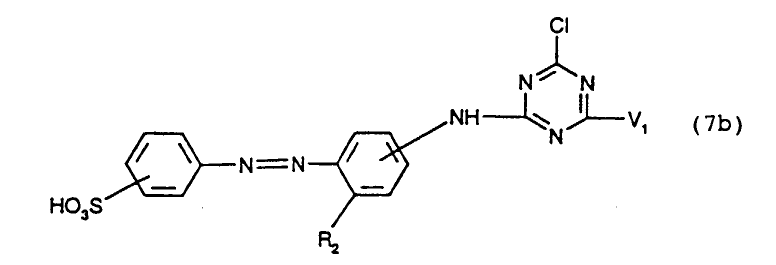 où
R₂ représente un atome d'hydrogène, des groupes alkyle en C₁-C₄, alkoxy en C₁-C₄, (alcanoyl en C₂-C₄)amino, uréido ou halogène, en particulier un groupe (alcanoyl en C₂-C₄)amino, et
V₁ possède les significations données à la revendication 1.

10. Colorants réactifs selon la revendication 1 de formule 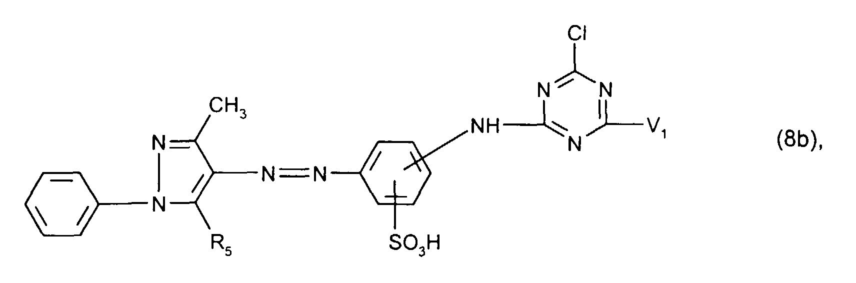 où
R₅ possède les significations données à la revendication 1, et
V₁ représente un reste de formule (2a), (2b) ou (2c).

11. Colorants réactifs selon la revendication 1 de formule 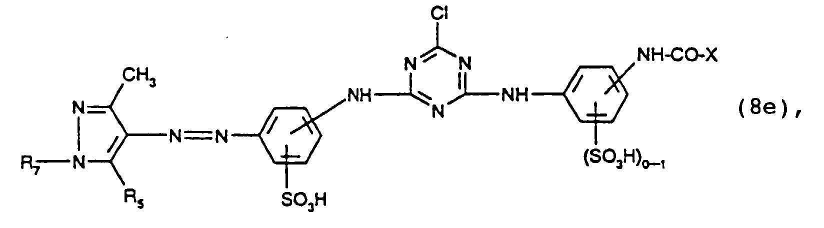 où
R₅, R₇ et X possèdent les significations données à la revendication 1 et les colorants réactifs de formule (8e) ne présentant qu'un ou deux groupes sulfo.

12. Colorants réactifs selon l'une des revendications 1 et 3 à 9, caractérisés en ce que V₁ représente un reste de formule (2c) ou (2d).

13. Colorants réactifs selon l'une des revendications 1 et 3 à 9, caractérisés en ce que V₁ représente un reste de formule (2d).

14. Procédé de préparation de colorants réactifs selon la revendication 1, caractérisés en ce qu'on fait réagir des composés de formules 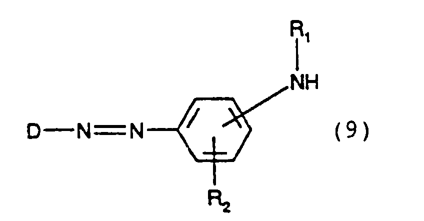 et
H-V₁ (10)
avec le chlorure de cyanuryle et on fait éventuellement suivre par une réaction de transformation, R₁, R₂ et V₁ ayant les significations données à la revendication 1.

15. Utilisation des colorants réactifs obtenus selon l'une des revendications 1 à 13, ou selon la revendication 14, pour la teinture ou l'impression de matières fibreuses contenant des groupes hydroxyle ou des atomes d'azote.

16. Utilisation selon la revendication 15, pour la teinture ou l'impression de matières de fibres polyamide naturel ou synthétique.
